# EUROPEAN PATENT APPLICATION

(11) **EP 4 620 684 A1**
(43) Date of publication of application: **24.09.2025**
(21) Application number: 25164961.2
(22) Date of filing: 20.03.2025
(51) Int. Cl.: B41J 2/175

(54) **LIQUID CONTAINER, PRINTING APPARATUS, AND PRINTING SYSTEM**

(30) Priority: 22.03.2024 JP 2024045876; 21.10.2024 JP 2024185088
(71) Applicant: Seiko Epson Corporation, Tokyo 160-8801 (JP)
(72) Inventor: OZEKI, Hiroyoshi, Suwa-shi, 392-8502 (JP)
(74) Representative: Lewis Silkin LLP

(57) **Abstract**

A liquid container includes a liquid accommodation container, and an adapter, in which the liquid container includes a liquid contact section that is in contact with a liquid and a non-liquid contact section that is not in contact with the liquid, and a specific portion that is at least a portion of the non-liquid contact section in the adapter is made of a material containing recycled plastic.

## Description

The present application is based on, and claims priority from JP Application Serial Number 2024-045876, filed March 22, 2024 and JP Application Serial Number 2024-185088, filed October 21, 2024, the disclosures of which are hereby incorporated by reference herein in their entirety.

### BACKGROUND

### 1. Technical Field

The present disclosure relates to a liquid container, a printing apparatus, and a printing system.

### 2. Related Art

In the related art, a liquid container configured by a liquid accommodation container and an adapter and supplying a liquid to a printing apparatus is known. JP-A-2022-53798 discloses a liquid container in which a functional member such as a positioning section, a liquid supply port, or a terminal contact substrate is formed on an adapter side. The liquid container performs positioning or the like with the printing apparatus via the functional member.

JP-A-2022-53798, a material constituting the liquid container is not examined. Meanwhile, in recent years, from the viewpoint of a recycling-oriented society, it is desired to use recycled plastic as the material constituting the liquid container.

### SUMMARY

The present disclosure can be implemented in the following aspects.
1. According to a first aspect of the present disclosure, there is provided a liquid container including a liquid accommodation container, and an adapter. The liquid container includes a liquid contact section that is in contact with a liquid and a non-liquid contact section that is not in contact with the liquid, and a specific portion that is at least a portion of the non-liquid contact section in the adapter is made of a material containing recycled plastic.
2. According to a second aspect of the present disclosure, there is provided a liquid container including a liquid accommodation container, and an adapter. The liquid container includes a liquid contact section that is in contact with a liquid and a non-liquid contact section that is not in contact with the liquid, the liquid accommodation container is formed of a multilayer structure including at least two layers, the liquid contact section in the multilayer is made of a virgin plastic material, and the non-liquid contact section in the multilayer is made of a material containing recycled plastic.

### BRIEF DESCRIPTION OF THE DRAWINGS

FIG. 1 is a perspective view illustrating a configuration of a printing system according to a first embodiment.
FIG. 2 is a view illustrating a cartridge mounting section and a cartridge.
FIG. 3 is a perspective view illustrating the cartridge mounting section.
FIG. 4 is a partially enlarged view illustrating the cartridge mounting section.
FIG. 5 is a perspective view illustrating a first type cartridge.
FIG. 6 is a first exploded perspective view illustrating the first type cartridge.
FIG. 7 is a second exploded perspective view illustrating the first type cartridge.
FIG. 8 is a first view illustrating a portion of the first type cartridge.
FIG. 9 is a second view illustrating a portion of the first type cartridge.
FIG. 10 is a third view illustrating a portion of the first type cartridge.
FIG. 11 is a cross-sectional view illustrating the cartridge and the cartridge mounting section.
FIG. 12 is a perspective view illustrating a configuration of a printing system according to a second embodiment.
FIG. 13 is a schematic view illustrating a printing apparatus when viewed in a +Y direction.
FIG. 14 is a schematic view illustrating the printing apparatus when viewed in a +Z direction.
FIG. 15 is a schematic perspective view illustrating a liquid supply section.
FIG. 16 is a schematic perspective view illustrating a portion of a first coupling reception section.
FIG. 17 is a schematic perspective view illustrating a first mounting body.
FIG. 18 is a schematic exploded perspective view illustrating a first liquid accommodation container.
FIG. 19 is a schematic cross-sectional view of the first mounting body.
FIG. 20 is a schematic perspective view illustrating a coupling member.
FIG. 21 is a schematic perspective view illustrating a portion of the first mounting body.

### DESCRIPTION OF EMBODIMENTS

### A. First Embodiment:

### A-1. Configuration of Printing System:

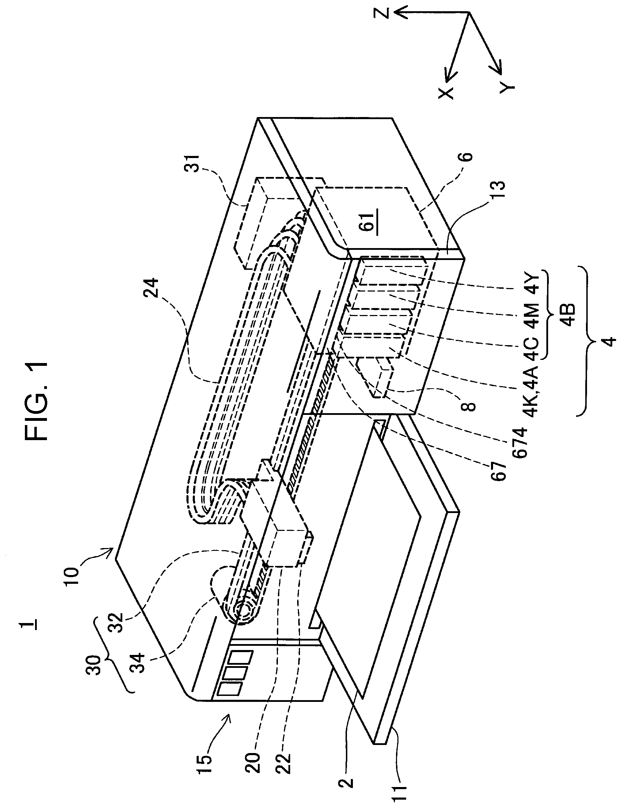

FIG. 1 is a perspective view illustrating a configuration of a printing system 1 according to a first embodiment. FIG. 1 illustrates XYZ axes that are three spatial axes orthogonal to each other. Directions in which arrows of the X axis, the Y axis, and the Z axis are directed are positive directions along the X axis, the Y axis, and the Z axis, respectively. The positive directions along the X axis, the Y axis, and the Z axis are a +X direction, a +Y direction, and a +Z direction, respectively. Directions opposite to the directions in which the arrows of the X axis, the Y axis, and the Z axis are directed are negative directions along the X axis, the Y axis, and the Z axis. The negative directions along the X axis, the Y axis, and the Z axis are a -X direction, a -Y direction, and a -Z direction, respectively. When the positive and negative directions along the X axis, the Y axis, and the Z axis do not matter, the directions may be referred to as an X direction, a Y direction, and a Z direction, respectively. The same applies to the drawings and the description thereof illustrated below.

The printing system 1 includes a printing apparatus 10 and a liquid container 4 that supplies an ink, which is a liquid, to the printing apparatus 10. In the first embodiment, the liquid container 4 is a cartridge. In the description of the first embodiment, the liquid container 4 is referred to as a "cartridge 4".

The printing apparatus 10 according to the present embodiment is an inkjet printer that jets an ink as a liquid from a jetting head 22. The printing apparatus 10 is a large printer that performs printing on a large sheet of paper such as a poster. The printing apparatus 10 includes a cartridge mounting section 6, a controller 31, a carriage 20, the jetting head 22, and a driving device 30. Further, the printing apparatus 10 includes an operation button 15 for a user to operate an operation of the printing apparatus 10.

The cartridge mounting section 6 has a first apparatus wall 67 located on a +Y direction side. The first apparatus wall 67 has an insertion and removal opening section 674 that is an inlet/outlet of the cartridge 4 with respect to an accommodation chamber 61. Via the insertion and removal opening section 674, the cartridge 4 is accommodated in the accommodation chamber 61 of the cartridge mounting section 6, or the cartridge 4 is removed from the accommodation chamber 61. Each of a plurality of cartridges 4 is detachably mounted in the cartridge mounting section 6. In the present embodiment, four types of the cartridges 4 are mounted in the cartridge mounting section 6, one for each of four colors of ink: black, yellow, magenta, and cyan, that is, a total of four cartridges 4. The cartridge 4 that accommodates a black ink is also referred to as a cartridge 4K, the cartridge 4 that accommodates a yellow ink is also referred to as a cartridge 4Y, and the cartridge 4 that accommodates a magenta ink is also referred to as a cartridge 4M, and the cartridge 4 that accommodates a cyan ink is also referred to as a cartridge 4C. In the present embodiment, the cartridge 4K is configured to accommodate a larger amount of liquid than in the cartridges 4C, 4M, and 4Y. Accordingly, the cartridge 4K is also referred to as a first type cartridge 4A, and the cartridges 4C, 4M, and 4Y are also referred to as a second type cartridge 4B.

The printing apparatus 10 has a replacement cover 13 on a front surface on the +Y direction side. The replacement cover 13 is configured to be opened and closed. By opening the replacement cover 13, an opening of the cartridge mounting section 6 appears, and the cartridge 4 can be mounted and removed. When the cartridge 4 is mounted in the cartridge mounting section 6, the ink can be supplied to the jetting head 22 provided on the carriage 20 via a tube 24 as a liquid flow tube. In the present embodiment, the ink is supplied from the cartridge 4 to the jetting head 22 using a hydraulic head difference. Specifically, the ink is supplied to the jetting head 22 using the hydraulic head difference between an ink liquid level in the cartridge mounting section 6 and the jetting head 22. The printing apparatus 10 may supply the ink to the jetting head 22 by suctioning the ink in the cartridge 4 via a pump mechanism (not illustrated). The tube 24 is provided for each type of the ink. In the present disclosure, a state in which the cartridge 4 is mounted in the cartridge mounting section 6 and the ink as a liquid can be supplied to the printing apparatus 10 is also referred to as a "mounted state".

In the jetting head 22, the nozzle is provided for each type of the ink. The jetting head 22 jets the ink from the nozzle toward printing paper 2 to print data such as a character or an image. In the present embodiment, the printing apparatus 10 is a printer called an "off-carriage type" in which the cartridge mounting section 6 is not linked to the movement of the carriage 20. The printer may be a printer called an "on-carriage type" in which the cartridge mounting section 6 is provided in the carriage 20 and the cartridge mounting section 6 moves together with the carriage 20.

The controller 31 controls each section of the printing apparatus 10 and exchanges signals with the cartridge 4. The carriage 20 moves the jetting head 22 relative to the printing paper 2.

The driving device 30 reciprocates the carriage 20 based on a control signal from the controller 31. The driving device 30 includes a timing belt 32 and a driving motor 34. By transmitting power of the driving motor 34 to the carriage 20 via the timing belt 32, the carriage 20 reciprocates in a main scanning direction that is a direction along the X direction. Further, the printing apparatus 10 includes a transport mechanism for moving the printing paper 2 in a sub-scanning direction that is the +Y direction. When the printing is performed, the printing paper 2 is moved in the sub-scanning direction by the transport mechanism, and the printing paper 2 is output onto a front cover 11 after the printing is completed.

In the present embodiment, in a use state of the printing system 1, an axis along the sub-scanning direction for transporting the printing paper 2 is the Y axis, an axis along a gravitational downward direction is the Z axis, and an axis along a movement direction of the carriage 20 is the X axis. Here, the "use state of the printing system 1" means a state in which the printing system 1 is installed in a horizontal surface. In addition, in the present embodiment, the sub-scanning direction is the +Y direction, a direction opposite thereto is the - Y direction, the gravitational downward direction is the -Z direction, and a gravitational upward direction is the +Z direction. The X direction and the Y direction are directions along a horizontal direction. When the printing system 1 is viewed from a front surface side, a direction from a right side to a left side is the +X direction, and a direction opposite thereto is the -X direction. Further, in the present embodiment, an insertion direction in which the cartridge 4 is inserted into the cartridge mounting section 6 for mounting is the -Y direction, and a direction in which the cartridge 4 is removed from the cartridge mounting section 6 is the +Y direction. Accordingly, in the cartridge mounting section 6, a -Y direction side is also referred to as a back side, and the +Y direction side is also referred to as a front side. In the present embodiment, an arrangement direction of the plurality of cartridges 4 is the X direction.

### A-2. Schematic Configuration of Mounted State of Cartridge 4:

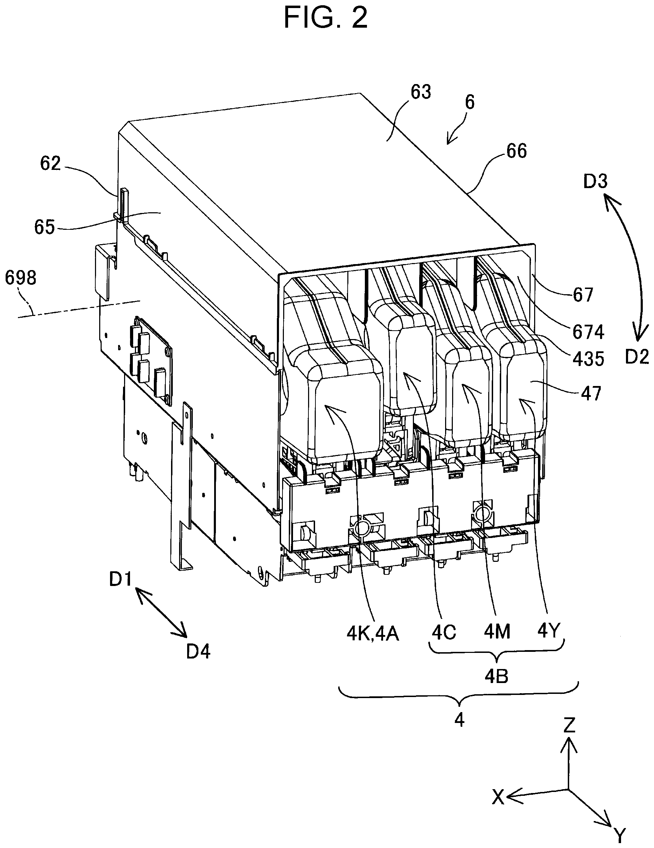

FIG. 2 is a view illustrating the cartridge mounting section 6 and the cartridge 4. In FIG. 2, the cartridges 4K, 4M, and 4Y indicate the mounted state in which the mounting in the cartridge mounting section 6 is completed. In addition, in FIG. 2, the cartridge 4C indicates a state in which the insertion into the cartridge mounting section 6 is completed. In the present disclosure, the state of the cartridge 4 in which the insertion into the cartridge mounting section 6 is completed is referred to as an "inserted state".

The cartridge 4 is detachably mounted in the cartridge mounting section 6. The cartridge 4 is changed to the mounted state in which the cartridge 4 is mounted in the cartridge mounting section 6 from the inserted state in which the cartridge 4 is inserted into a predetermined position of the cartridge mounting section 6 by moving in an insertion direction D1 along the horizontal direction, by rotationally moving in a rotation mounting direction D2 by receiving a force having a gravitational downward direction component with the back side of the cartridge mounting section 6 in the insertion direction D1 as a rotation fulcrum 698. Specifically, when the cartridge 4 is mounted in the cartridge mounting section 6, a mounting process is executed. The mounting process includes a terminal coupling process and a supply section coupling process executed following the terminal coupling process. The terminal coupling process is a process of inserting the cartridge 4 to the predetermined position by moving the cartridge 4 in the insertion direction D1 along the horizontal direction to insert the cartridge 4 into the accommodation chamber 61 of the cartridge mounting section 6 via the insertion and removal opening section 674 of the first apparatus wall 67. The predetermined position is a position at which the contact between a cartridge side terminal (which will be described below) of the cartridge 4 and an apparatus side terminal (which will be described below) of the cartridge mounting section 6 is completed. The supply section coupling process is a process of coupling a liquid introduction section (which will be described below) of the cartridge mounting section 6 and a liquid supply section (which will be described below) of the cartridge 4 in a state in which the contact between the apparatus side terminal and the cartridge side terminal is maintained. Specifically, in the supply section coupling process, an operation surface 435 of the cartridge 4 receives a force in the gravitational downward direction, and the cartridge 4 rotationally moves in the rotation mounting direction D2 indicated by an arrow around the rotation fulcrum 698 of the cartridge mounting section 6, so that the liquid introduction section and the liquid supply section are coupled to each other. In the mounted state, a cartridge side engagement section of the cartridge 4 (which will be described below) is maintained in the mounted state by being engaged with a mounting engagement section (which will be described below) provided in the cartridge mounting section 6.

When the cartridge 4 is taken out from the cartridge mounting section 6, the user lifts the cartridge 4 on a rear wall 47 side to rotationally move in a coupling release direction D3, which is a direction opposite to the rotation mounting direction D2, with the rotation fulcrum 698 as a fulcrum. As a result, the engagement between the mounting engagement section provided in the cartridge mounting section 6 and the cartridge engagement section provided in the cartridge 4 is released. The cartridge 4 transitions from the mounted state to the inserted state by rotationally moving in the coupling release direction D3. After the cartridge 4 is in the inserted state, the cartridge 4 is moved in the +Y direction, which is a removal direction D4, so that the cartridge 4 is taken out from the cartridge mounting section 6.

### A-3. Detailed Configuration of Cartridge Mounting Section 6:

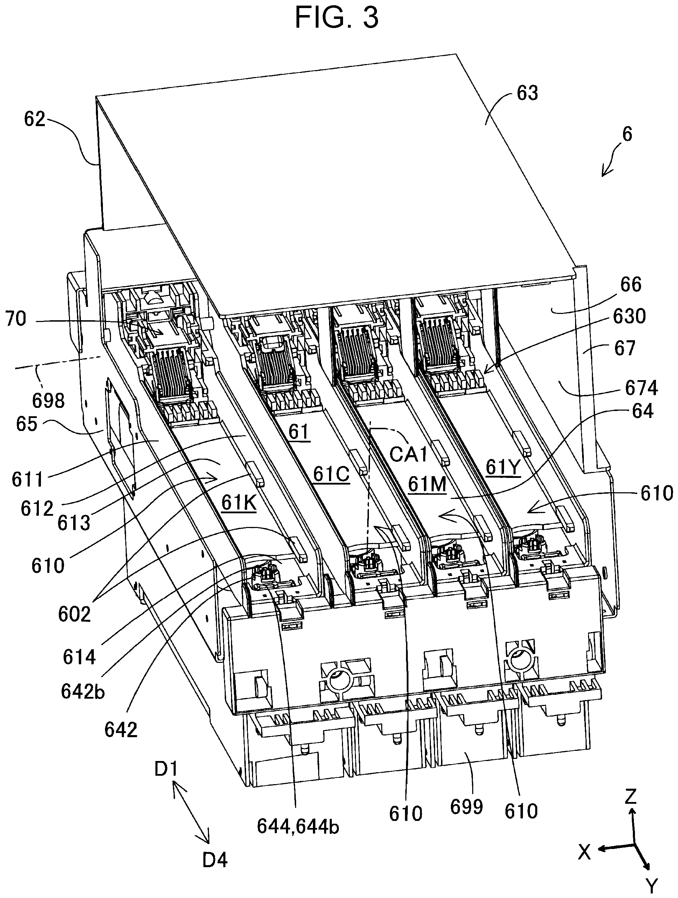

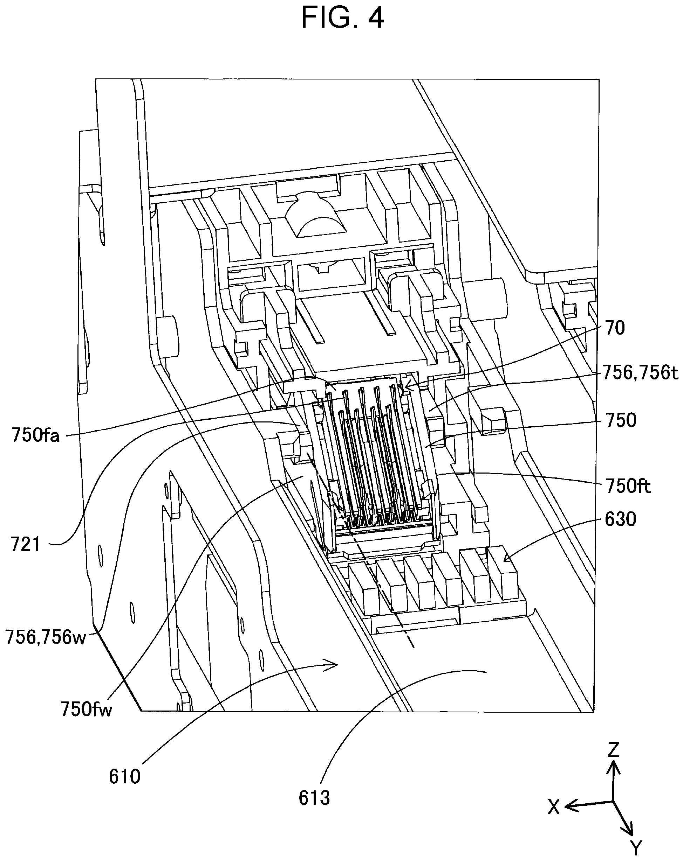

FIG. 3 is a perspective view of the cartridge mounting section 6. FIG. 4 is a partially enlarged view of the cartridge mounting section 6. For the cartridge mounting section 6, the X direction is also referred to as a width direction, the Y direction is also referred to as a depth direction, and the Z direction is also referred to as a height direction. Hereinafter, when there is no particular description about the state, each element will be described on the premise of the cartridge mounting section 6 in an initial disposition state in which the cartridge 4 is not mounted in the cartridge mounting section 6.

As illustrated in FIG. 3, the cartridge mounting section 6 forms the accommodation chamber 61 in which the cartridge 4 is accommodated. The accommodation chamber 61 has a substantially rectangular parallelepiped shape. In the accommodation chamber 61, slots 61C, 61M, 61Y, and 61K, which are portions for accommodating the cartridges 4C, 4M, 4Y, and 4K, correspond to outer shapes of the cartridges 4C, 4M, 4Y, and 4K. In the present embodiment, the cartridge 4K has a larger dimension in the X direction in order to increase an amount of liquid to be accommodated as compared with the other cartridges 4C, 4M, and 4Y. Therefore, in the present embodiment, a width of the slot 61K is larger than widths of the other slots 61C, 61M, and 61Y.

As illustrated in FIG. 3, the cartridge mounting section 6 has six apparatus walls 62, 63, 64, 65, 66, and 67 that form the accommodation chamber 61. In the present disclosure, the "wall" is a concept including a single wall as well as a wall formed by a plurality of walls. The first apparatus wall 67 forms the insertion and removal opening section 674 through which the cartridge 4 passes when the cartridge 4 is inserted into or removed from the accommodation chamber 61. A second apparatus wall 62 forms a wall of the accommodation chamber 61 in the -Y direction. The second apparatus wall 62 faces the first apparatus wall 67 in the Y direction.

An apparatus upper wall 63 forms a wall of the accommodation chamber 61 on a +Z direction side. An apparatus bottom wall 64 faces the apparatus upper wall 63 in the Z direction and forms a wall of the accommodation chamber 61 on a -Z direction side. The apparatus bottom wall 64 is formed by a support member 610. The apparatus bottom wall 64 includes a plurality of apparatus opening sections 614. In the present embodiment, the apparatus opening section 614 is formed in four shapes corresponding to the slots 61C, 61M, 61Y, and 61K. The apparatus upper wall 63 and the apparatus bottom wall 64 intersect the second apparatus wall 62 and the first apparatus wall 67. In the present disclosure, the "cross" or "intersect" means any one of (i) a state in which two elements intersect each other and actually cross each other, (ii) a state in which one element crosses the other element when the one element is extended, or (iii) a state in which the elements cross each other when each element is extended.

As illustrated in FIG. 3, the cartridge mounting section 6 further includes the support member 610, a liquid introduction section 642, an apparatus side supply section positioning section 644, and an apparatus guide section 602. A plurality of support members 610 are provided corresponding to the number of cartridges 4 to be mounted. In the present embodiment, four support members 610 are provided. The support member 610 forms the apparatus bottom wall 64 on a gravitational downward direction side of the accommodation chamber 61. The support member 610 supports the cartridge 4 from the -Z direction side that is the gravitational downward direction side. The support member 610 is a member extending in the Y direction. The support member 610 has a recessed shape. The support member 610 includes a main wall 613 that forms the apparatus bottom wall 64, a first support side wall 611, and a second support side wall 612.

The main wall 613 forms a bottom section having a recessed shape located on the gravitational downward direction side. The apparatus opening section 614 is formed at an end section of the main wall 613 on the first apparatus wall 67 side. The apparatus opening section 614 penetrates the main wall 613 in a thickness direction of the main wall 613.

As illustrated in FIG. 3, the first support side wall 611 stands up from a +X direction side end section of the main wall 613 to the +Z direction that is the gravitational upward direction. The second support side wall 612 stands up from a -X axis direction side end section of the main wall 613 to the +Z direction. The first support side wall 611 and the second support side wall 612 face each other in the X direction.

The apparatus guide section 602 guides the cartridge 4 in the insertion direction D1 and the removal direction D4. The apparatus guide section 602 is provided for each support member 610. The apparatus guide section 602 is provided on each of the first support side wall 611 and the second support side wall 612. The apparatus guide section 602 is a protrusion provided on the first support side wall 611 and the second support side wall 612.

As illustrated in FIG. 3, the liquid introduction section 642 receives the liquid of the cartridge 4. The liquid introduction section 642 has a central axis CA1. In the initial disposition state of the cartridge mounting section 6, the liquid introduction section 642 is not located in the accommodation chamber 61, but is located on the -Z direction side of the accommodation chamber 61. That is, the liquid introduction section 642 is located on the opposite side to the support member 610 with the accommodation chamber 61 interposed therebetween. In the present embodiment, a distal end section 642b of the liquid introduction section 642 is disposed in the accommodation chamber 61 by causing the support member 610 to rotationally move in the rotation mounting direction D2 around the rotation fulcrum 698 to push down the apparatus opening section 614. That is, the rotation fulcrum 698 causes the support member 610 to rotationally move such that the apparatus opening section 614 is displaced in the gravitational downward direction side, and thus the distal end section 642b of the liquid introduction section 642 is disposed in the accommodation chamber 61 via the apparatus opening section 614.

The apparatus side supply section positioning section 644 illustrated in FIG. 3 is received by a supply section positioning section (which will be described below) of the cartridge 4, and thus restricts the movement of the liquid supply section of the cartridge 4 with respect to the liquid introduction section. As a result, the liquid supply section of the cartridge 4 is positioned. In the initial state of the cartridge mounting section 6, the apparatus side supply section positioning section 644 is not located in the accommodation chamber 61, and is located on the -Z direction side of the accommodation chamber 61. That is, the apparatus side supply section positioning section 644 is located on the opposite side to the support member 610 with the accommodation chamber 61 interposed therebetween. The other end section 644b of the apparatus side supply section positioning section 644 is disposed in the accommodation chamber 61 by rotating the support member 610 in the rotation mounting direction D2 around the rotation fulcrum 698 to push down the apparatus opening section 614. That is, the rotation fulcrum 698 rotates the support member 610 to displace the apparatus opening section 614, and thus the other end section 644b of the apparatus side supply section positioning section 644 is disposed in the accommodation chamber 61 via the apparatus opening section 614.

As illustrated in FIG. 3, the cartridge mounting section 6 further includes an apparatus side terminal section 70 and an apparatus side identification section 630. The apparatus side terminal section 70 has an apparatus side terminal that is in contact with the cartridge side terminal of the cartridge 4 in a mounting-completed state of the cartridge 4.

As illustrated in FIG. 4, the apparatus side terminal section 70 includes a plurality of apparatus side terminals 721 and an apparatus side terminal positioning section 756. As the plurality of apparatus side terminals 721, nine apparatus side terminals 721 are provided in the present embodiment. Each of the plurality of apparatus side terminals 721 is a metal plate member having conductivity. The apparatus side terminal positioning section 756 is received by the terminal positioning section of the cartridge 4 in an insertion process of inserting the cartridge 4 into the accommodation chamber 61, and the movement in the X direction and the Y direction, which are directions intersecting the insertion direction D1, is restricted. As a result, the apparatus side terminal 721 and a cartridge side terminal 521 are positioned in the direction intersecting the insertion direction D1.

Two apparatus side terminal positioning sections 756 are provided for each of the slots 61C to 61K. One of the two apparatus side terminal positioning sections 756 is also referred to as a first apparatus side terminal positioning section 756t, and the other thereof is also referred to as a second apparatus side terminal positioning section 756w. Each of the first apparatus side terminal positioning section 756t and the second apparatus side terminal positioning section 756w is a columnar member extending in the Y direction. The first apparatus side terminal positioning section 756t is provided on a first holding section side wall 750ft. The second apparatus side terminal positioning section 756w is provided on a second holding section side wall 750fw.

As illustrated in FIGS. 3 and 4, the apparatus side identification section 630 is used to identify whether or not correct types of the cartridges 4C, 4M, 4Y, and 4K are inserted into the slots 61C, 61M, 61Y, and 61K of the accommodation chamber 61. The apparatus side identification section 630 forms a different pattern shape depending on the colors of the liquids accommodated in the cartridges 4C, 4M, 4Y, and 4K. The apparatus side identification section 630 is provided on the main wall 613 of the support member 610.

As illustrated in FIG. 4, the apparatus side identification section 630 is formed by at least one or more ribs. The pattern shape is determined by the number and the positions of the ribs. The cartridge 4 is also provided with a cartridge side identification section (which will be described below) formed by the rib. The cartridge side identification section forms a different pattern shape depending on the type of the cartridge 4, that is, the color of the liquid to be accommodated. When the correct types of the cartridges 4 is inserted into the corresponding slots 61C to 61K, the apparatus side identification section 630 and the cartridge side identification section are fitted to each other without colliding with each other. On the other hand, when wrong types of the cartridge 4 are inserted into the slots 61C to 61K, the apparatus side identification section 630 and the cartridge side identification section collide with each other, and further insertion of the cartridge 4 is hindered. As a result, it is possible to reduce the possibility that the wrong type of the cartridge 4 is mounted in each of the slots 61C to 61K of the cartridge mounting section 6.

As illustrated in FIG. 3, each of the apparatus side terminal section 70 and the apparatus side identification section 630 is provided on the support member 610. The apparatus side terminal section 70 and the apparatus side identification section 630 are located on the opposite side to the first apparatus wall 67 with the liquid introduction section 642 and the apparatus opening section 614 interposed therebetween in the Y direction that is a direction in which the support member 610 extends. Specifically, the apparatus side terminal section 70 and the apparatus side identification section 630 are provided in a vicinity of the second apparatus wall 62. Further, the apparatus side terminal section 70 is located on the second apparatus wall 62 side, which is the -Y direction side, relative to the apparatus side identification section 630.

### A-4. Detailed Configuration of Cartridge 4:

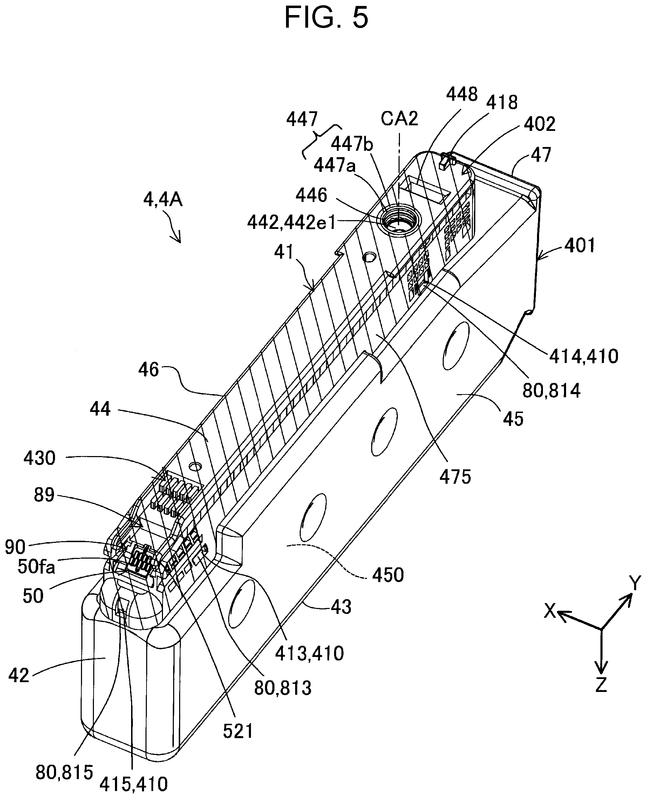

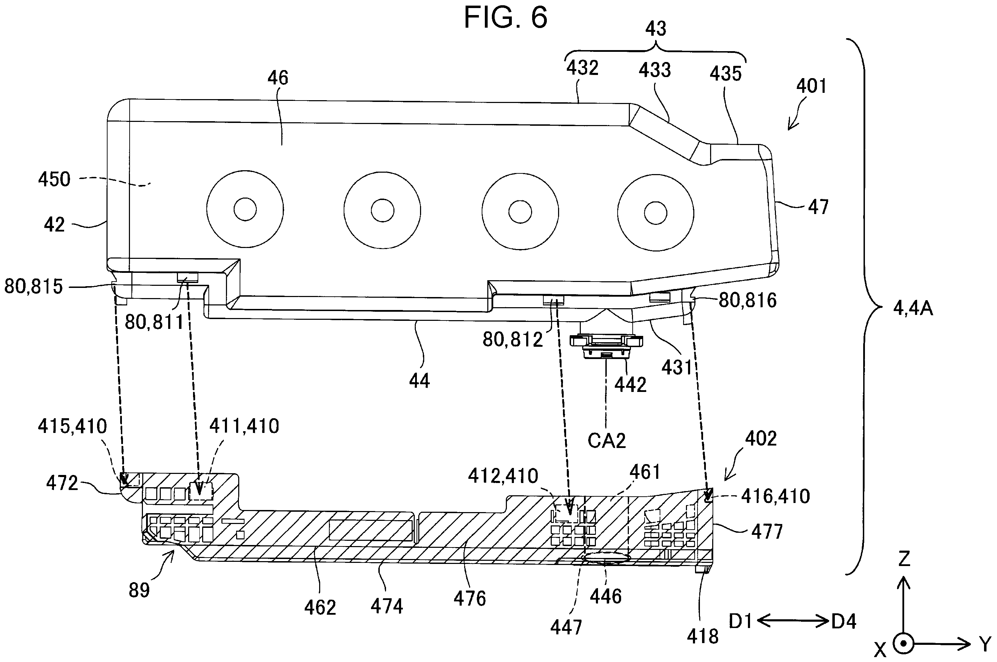

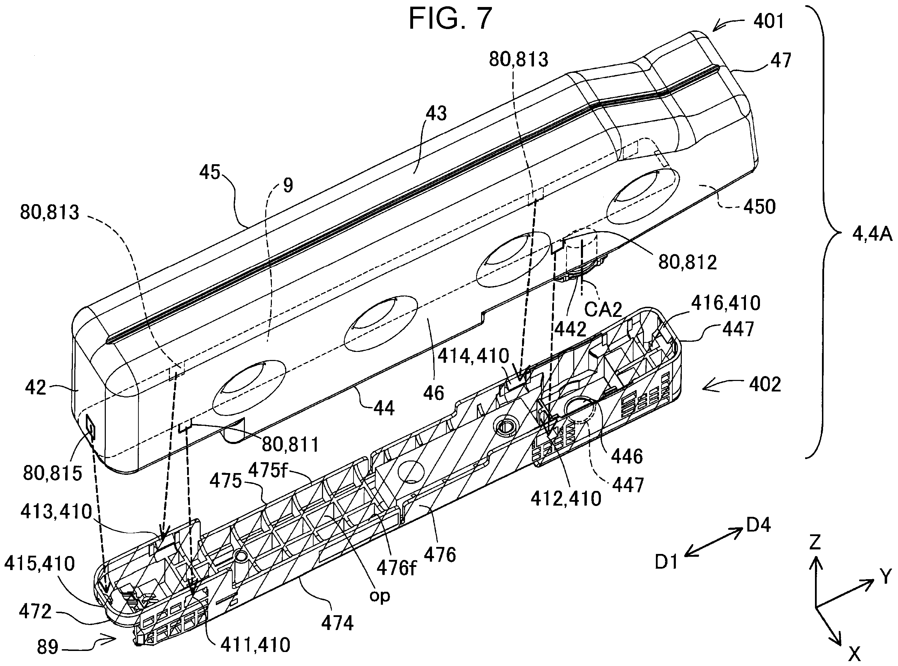

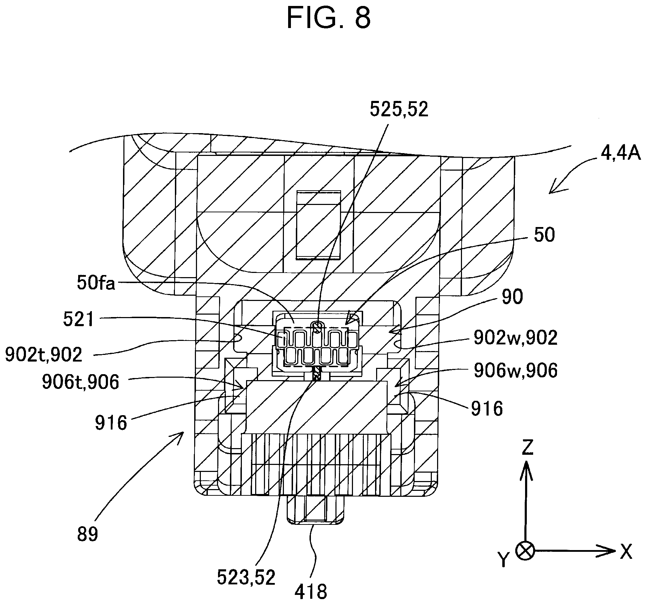

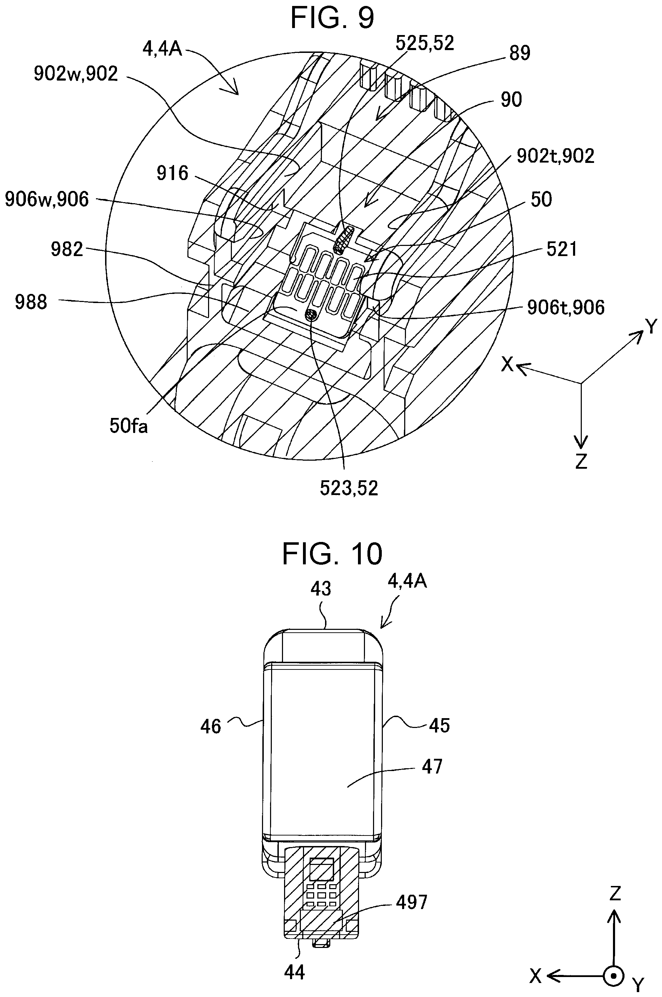

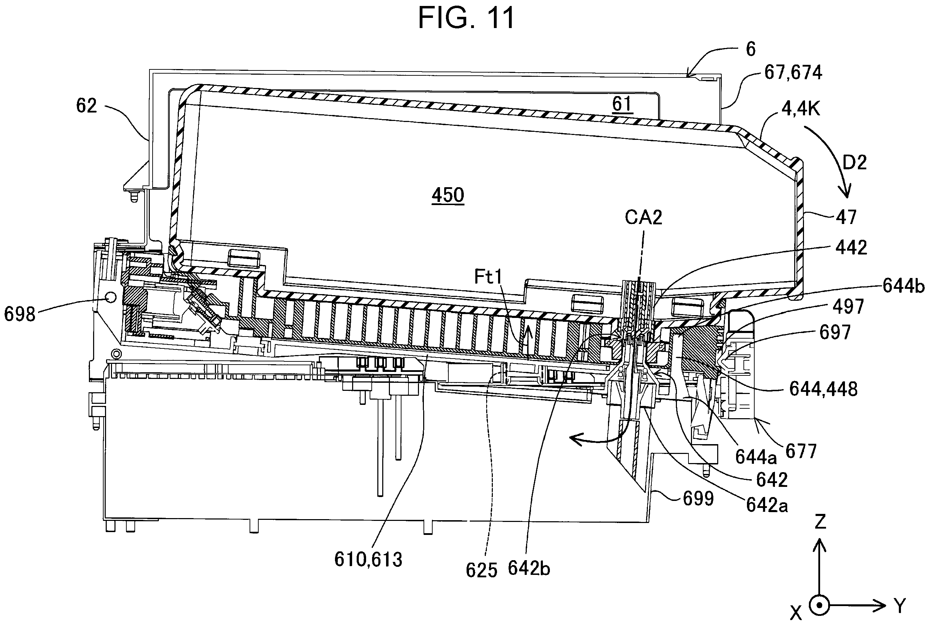

FIG. 5 is a perspective view of the first type cartridge 4A. FIG. 6 is a first exploded perspective view of the first type cartridge 4A. FIG. 7 is a second exploded perspective view of the first type cartridge 4A. FIG. 8 is a first view illustrating a portion of the first type cartridge 4A. FIG. 9 is a second view illustrating a portion of the first type cartridge 4A. FIG. 10 is a third view illustrating a portion of the first type cartridge 4A. FIG. 11 is a cross-sectional view of the cartridge 4 and the cartridge mounting section 6. For the cartridge 4, the Y direction is the depth direction, the Z direction is the height direction, and the X direction is the width direction. In the drawing illustrating the cartridge 4, the X direction, the Y direction, and the Z direction are based on an insertion posture of the cartridge 4 into the cartridge mounting section 6. The insertion posture is the same as a posture of the cartridge 4 when the inserted state in which the insertion into the cartridge mounting section 6 is completed. A difference between the first type cartridge 4A and the second type cartridge 4B is a width of a liquid accommodation container 401. The first type cartridge 4A has a larger width than the second type cartridge 4B. Therefore, a volume of a liquid accommodation container 450 of the first type cartridge 4A is larger than a volume of a liquid accommodation container 450 of the second type cartridge 4B. Other configurations are the same between the first type cartridge 4A and the second type cartridge 4B. Hereinafter, the configuration of the cartridge 4 will be described using the first type cartridge 4A.

As illustrated in FIG. 5, in the present embodiment, the first type cartridge 4A is configured by two members. Specifically, the first type cartridge 4A includes the liquid accommodation container 401 and an adapter 402 attached to the liquid accommodation container 401 by fitting. Each of the liquid accommodation container 401 and the adapter 402 is molded by, for example, injection molding a synthetic resin such as polypropylene.

The first type cartridge 4A according to the present embodiment includes a liquid contact section that is in contact with the liquid to be accommodated and a non-liquid contact section that is not in contact with the liquid. The liquid contact section is made of a virgin plastic material. The virgin plastic material is plastic that is generated without containing an additive component and does not use waste plastic. That is, the virgin plastic material is plastic that has not been reused. The non-liquid contact section is made of a material containing recycled plastic. The recycled plastic is plastic that is generated from waste plastic and in which a plurality of pieces of plastic are mixed. Here, the waste plastic can be polyethylene (PE), polypropylene (PP), and the like as a recycled material that has been recycled. In the present disclosure, the "recycled material" includes a pre-consumer material and a post-consumer material defined in JIS Q14021. The pre-consumer material is a material taken out from a waste flow in a manufacturing process. Specifically, the pre-consumer material can be, for example, unnecessary end materials generated when manufacturing a container made of a synthetic resin. The post-consumer material is a material discharged from a home or a material generated as a product that can no longer be used for the original purpose from a commercial facility, an industrial facility, and various facilities as an end user, and includes a material returned from a distribution route. The post-consumer material can be, specifically, a recycled resin such as a crushed product obtained by crushing a recycled synthetic resin container. In the present embodiment, the material containing the recycled plastic includes a material made of only the recycled plastic, as well as a material made of a mixture of the virgin plastic and the recycled plastic. The material containing the recycled plastic contains, for example, the recycled plastic in an amount of more than 0% by weight and up to about 40% by weight and the virgin plastic in an amount of less than 100% by weight and up to about 60% by weight. The material containing the recycled plastic may be, for example, generated by reacting a polycarbonate resin, a polyester resin, and a resin having a reactive functional group, and may have excellent impact strength and flame retardancy. In the present embodiment, the liquid contact section is the liquid accommodation container 401 and a first peripheral section (which will be described below) in the adapter 402. The non-liquid contact section is a portion of the adapter 402 excluding the first peripheral section. In FIGS. 5 to 10, a portion constituting the non-liquid contact section is hatched. A portion that is not hatched is the liquid contact section.

As illustrated in FIG. 5, the first type cartridge 4A includes a main body 41 forming an outer shell and a circuit substrate 50 attached to the main body 41. The main body 41 is formed by the liquid accommodation container 401 and the adapter 402 described above. The main body 41 of the first type cartridge 4A has a front wall 42, a rear wall 47, an upper wall 43, a bottom wall 44, a first side wall 45, a second side wall 46, and a corner section 89. The walls 42, 43, 44, 45, 46, and 47 are also referred to as surfaces 42, 43, 44, 45, 46, and 47, respectively. The front wall 42 and the rear wall 47 face each other in the Y direction along the insertion direction D1. The upper wall 43 and the bottom wall 44 face each other in the Z direction. The Z direction is parallel to a central axis CA2 along a direction in which a liquid supply section 442 extends. The first side wall 45 and the second side wall 46 face each other in the X direction.

As illustrated in FIG. 5, the first side wall 45 is located on a -X direction side, and the second side wall 46 is located on the +X direction side. Each of the first side wall 45 and the second side wall 46 intersects the front wall 42, the rear wall 47, the upper wall 43, and the bottom wall 44. The corner section 89 is provided at a corner portion in which the front wall 42 and the bottom wall 44 intersect each other, and the circuit substrate 50 having the cartridge side terminal 521 is disposed in the corner section 89. The corner section 89 has a recess section 90 recessed inward.

The first type cartridge 4A further includes the liquid accommodation container 450 that accommodates the liquid, the liquid supply section 442, a cartridge side identification section 430, a supply section positioning section 448, an accommodation body engagement section 80, the circuit substrate 50, a protrusion section 418, and a cartridge engagement section 497 illustrated in FIG. 10.

The liquid supply section 442 illustrated in FIGS. 5 and 6 communicates with the liquid accommodation container 450 and has the central axis CA2. A direction along the central axis CA2 is the Z direction. A direction along the central axis CA, which is a direction in which the liquid supply section 442 extends, intersects the -Y direction that is the insertion direction D1. That is, the liquid supply section 442 extends in the direction intersecting the insertion direction D1, that is, the Z direction in the present embodiment. As illustrated in FIG. 6, the liquid supply section 442 is a tubular member that protrudes from an accommodation body bottom wall 431, which is the bottom wall of the liquid accommodation container 401, to the adapter 402 side. The liquid supply section 442 is disposed in a supply section disposition chamber 461 having a recessed shape of the adapter 402. An insertion opening section 446 is formed on a bottom section having a recessed shape of the supply section disposition chamber 461.

A peripheral section 447 as the insertion section illustrated in FIG. 5 is a region surrounding the insertion opening section 446 and partitions the insertion opening section 446. The peripheral section 447 has a first peripheral section 447a that is a region surrounding the liquid supply section 442 and a second peripheral section 447b that is a region surrounding the first peripheral section 447a. In the adapter 402, the first peripheral section 447a is a region that is likely to be in contact with the liquid. The first peripheral section 447a may be in contact with the liquid leaking from the liquid supply section 442 when, for example, the coupling between the liquid supply section 442 and the liquid introduction section 642 is released. Therefore, in the present embodiment, the first peripheral section 447a is made of the virgin plastic material. On the other hand, the second peripheral section 447b is a region that is not in contact with the liquid. Therefore, the second peripheral section 447b constituting the insertion section in the adapter 402 is made of the material containing the recycled plastic.

The cartridge side identification section 430 illustrated in FIG. 5 is used to identify whether or not the cartridges 4 are inserted into the correct slots 61C, 61M, 61Y, and 61K of the cartridge mounting section 6. The cartridge side identification section 430 is a rib disposed on a side of the bottom wall 44 close to the front wall 42, in the present embodiment, at a position adjacent to the corner section 89. The cartridge side identification section 430 forms a different pattern shape depending on the colors of the liquids accommodated in the cartridges 4C, 4M, 4Y, and 4K. The pattern shape is determined by the number and the positions of the ribs. In the present embodiment, the cartridge side identification section 430 is made of the material containing the recycled plastic.

The supply section positioning section 448 receives the apparatus side supply section positioning section 644 illustrated in FIG. 3, and performs positioning by restricting the movement of the liquid supply section 442 with respect to the liquid introduction section 642. Specifically, in the supply section coupling process, the supply section positioning section 448 receives the apparatus side supply section positioning section 644 and restricts the movement of the supply section positioning section 448 in the direction intersecting the rotation mounting direction D2, thereby positioning the liquid supply section 442 with respect to the liquid introduction section 642. As illustrated in FIG. 5, the supply section positioning section 448 is a recess section formed on the bottom wall 44 and recessed from an outer surface of the bottom wall 44. The supply section positioning section 448 has a rectangular cross section. In another embodiment, the supply section positioning section 448 may be a recess section penetrating the bottom wall 44. In the present embodiment, the supply section positioning section 448 extends in the +Z direction from the bottom wall 44 toward the upper wall 43. A direction in which the supply section positioning section 448 extends is a direction along a direction in which the liquid introduction section 642 is received.

The supply section positioning section 448 is a recess section having a substantially rectangular parallelepiped shape. Regarding the supply section positioning section 448, an opening area of an inlet section formed on the outer surface side of the bottom wall 44 is larger than an opening area of the bottom section side of the recess section on the back side from the inlet section. As a result, in the supply section coupling process, the supply section positioning section 448 can easily receive the apparatus side supply section positioning section 644. The supply section positioning section 448 is located on the opposite side to the cartridge side terminal 521 of the circuit substrate 50 with the liquid supply section 442 or the insertion opening section 446 interposed therebetween in the insertion direction D1. In the present embodiment, the supply section positioning section 448 is formed in a vicinity of the rear wall 47 in the bottom wall 44. In the present embodiment, the supply section positioning section 448 is made of the material containing the recycled plastic.

As illustrated in FIGS. 5 to 7, the liquid accommodation container 401 further includes the accommodation body engagement section 80 that is detachably engaged with the adapter 402. In the present embodiment, six accommodation body engagement sections 80 are provided. When the six accommodation body engagement sections 80 are used in a distinguished manner, a first accommodation body engagement section 811, a second accommodation body engagement section 812, a third accommodation body engagement section 813, a fourth accommodation body engagement section 814, a fifth accommodation body engagement section 815, and a sixth accommodation body engagement section 816 are used.

As illustrated in FIGS. 5 to 7, the accommodation body engagement section 80 is formed on a front surface 42, a rear surface 47, a first side surface 45, and a second side surface 46 of the liquid accommodation container 401. As illustrated in FIG. 6, the first accommodation body engagement section 811 and the second accommodation body engagement section 812 are formed at positions close to a bottom surface 44 in the second side surface 46. The first accommodation body engagement section 811 is formed at a position closer to the front surface 42 than the second accommodation body engagement section 812. As illustrated in FIG. 5, the third accommodation body engagement section 813 and the fourth accommodation body engagement section 814 are formed at positions close to the bottom surface 44 in the first side surface 45. The third accommodation body engagement section 813 is formed at a position closer to the front surface 42 than the fourth accommodation body engagement section 814. As illustrated in FIG. 6, the fifth accommodation body engagement section 815 is formed at a position close to the bottom surface 44 in the front surface 42. The sixth accommodation body engagement section 816 is formed at a position close to the bottom surface 44 in the rear surface 47. In the present embodiment, the accommodation body engagement section 80 is a recess section formed on the front surface 42, the rear surface 47, the first side surface 45, and the second side surface 46.

The adapter 402 has an adapter engagement section 410 for detachably engaging the accommodation body engagement section 80. The adapter engagement section 410 can perform engagement and engagement release with the accommodation body engagement section 80 by elastic deformation. In the present embodiment, the adapter engagement section 410 is elastically deformed by having a snap-fit structure. In the present embodiment, six adapter engagement sections 410 are provided corresponding to the number of accommodation body engagement sections 80. When the six adapter engagement sections 410 are used in a distinguished manner, a first adapter engagement section 411, a second adapter engagement section 412, a third adapter engagement section 413, a fourth adapter engagement section 414, a fifth adapter engagement section 415, and a sixth adapter engagement section 416 are used.

As illustrated in FIG. 7, the adapter engagement section 410 is formed on an adapter front surface 472, an adapter rear surface 477, an adapter first side surface 475, and an adapter second side surface 476, which are adapter peripheral surfaces. The first adapter engagement section 411 and the second adapter engagement section 412 are formed near an end surface 476f that defines an opening op of the adapter 402 facing the adapter bottom surface 474 in the adapter second side surface 476. The first adapter engagement section 411 is formed at a position closer to the adapter front surface 472 than the second adapter engagement section 412. The third adapter engagement section 413 and the fourth adapter engagement section 414 are formed near an end surface 475f that defines the opening op of the adapter 402 facing the adapter bottom surface 474 in the adapter first side surface 475. The third adapter engagement section 413 is formed at a position closer to the adapter front surface 472 than the fourth adapter engagement section 414. The fifth adapter engagement section 415 is formed at a position close to the adapter bottom surface 474 in the adapter front surface 472. The sixth adapter engagement section 416 is formed at a position close to the adapter bottom surface 474 in the adapter rear surface 477. In the present embodiment, the adapter engagement section 410 is a protrusion that is engaged with the accommodation body engagement section 80 that is the recess section. The adapter engagement section 410 protrudes to the inner side of the adapter 402 from the adapter front surface 472, the adapter rear surface 477, the adapter first side surface 475, and the adapter second side surface 476.

As illustrated in FIGS. 6 and 7, the first adapter engagement section 411 is engaged with the first accommodation body engagement section 811. The second adapter engagement section 412 is engaged with the second accommodation body engagement section 812. The third adapter engagement section 413 is engaged with the third accommodation body engagement section 813. The fourth adapter engagement section 414 is engaged with the fourth accommodation body engagement section 814. The fifth adapter engagement section 415 is engaged with the fifth accommodation body engagement section 815. The sixth adapter engagement section 416 is engaged with the sixth accommodation body engagement section 816.

As described above, the adapter engagement sections 411 to 416 are engaged with the corresponding accommodation body engagement sections 811 to 816 in an engagement releasable manner, and thus the adapter engagement sections 411 to 416 detachably engage the liquid accommodation container 401 with the adapter 402. In the present embodiment, the adapter engagement section 410 is made of the material containing the recycled plastic.

As illustrated in FIG. 8, the circuit substrate 50 is disposed in the corner section 89. The circuit substrate 50 has a plurality of cartridge side terminals 521 disposed on a surface 50fa. In the present embodiment, as the plurality of cartridge side terminals 521, nine cartridge side terminals 521 are provided. As illustrated in FIG. 9, the surface 50fa on which the plurality of cartridge side terminals 521 are disposed is inclined with respect to the insertion direction D1. Specifically, the surface 50fa is inclined with respect to the insertion direction D1 in a direction including a -Z direction component and a -Y direction component.

As illustrated in FIGS. 8 and 9, the terminal mounting section 52 mounts the circuit substrate 50 in the corner section 89. In the present embodiment, the terminal mounting section 52 includes a first terminal mounting section 523 and a second terminal mounting section 525. The first terminal mounting section 523 mounts the circuit substrate 50 from the +Y direction side. The second terminal mounting section 525 mounts the circuit substrate 50 from the -Y direction side. In the present embodiment, the first terminal mounting section 523 and the second terminal mounting section 525 are made of the material containing the recycled plastic.

As illustrated in FIGS. 8 and 9, the circuit substrate 50 is disposed in the recess section 90 of the corner section 89. As illustrated in FIG. 5, the recess section 90 is provided over the front wall 42 and the bottom wall 44. As illustrated in FIG. 9, the recess section 90 has a recess section front wall 982 that is located on the front wall 42 side and forms an inlet opening section, a recess section bottom wall 988 that forms a bottom section of the recess section 90, and a pair of recess section side walls 902t and 902w.

The recess section bottom wall 988 has a portion inclined with respect to the Y direction. In the present embodiment, the inclined portion is inclined to be located on the +Z direction side as going toward the recess section front wall 982 in the Y direction. The circuit substrate 50 is disposed in the inclined portion.

The pair of recess section side walls 902t and 902w are walls coupled to the recess section bottom wall 988. The pair of recess section side walls 902t and 902w face each other in the X direction. The first recess section side wall 902t is coupled to a -X direction side end section of the recess section bottom wall 988. The second recess section side wall 902w is coupled to a +X direction side end section of the recess section bottom wall 988. When the first recess section side wall 902t and the second recess section side wall 902w are used in a non-distinguished manner, the first recess section side wall 902t and the second recess section side wall 902w are referred to as a recess section side wall 902. The inlet opening section, which is an opening formed on the recess section front wall 982, is an inlet when the apparatus side terminal section 70 illustrated in FIG. 4 is inserted into the recess section 90.

As illustrated in FIG. 9, a pair of terminal positioning sections 906t and 906w are respectively provided on the pair of recess section side walls 902t and 902w. The pair of terminal positioning sections 906t and 906w are provided to face each other in the X axis direction. When the pair of terminal positioning sections 906t and 906w are used in a distinguished manner, the pair of terminal positioning sections 906t and 906w are also referred to as a first terminal positioning section 906t and a second terminal positioning section 906w, and when the pair of terminal positioning sections 906t and 906w are used in a non-distinguished manner, the pair of terminal positioning sections 906t and 906w are also referred to as a terminal positioning section 906. The terminal positioning section 906 is a groove formed on the recess section side wall 902. The first terminal positioning section 906t is a groove having a recessed shape from the surface of the first recess section side wall 902t. The second terminal positioning section 906w is a groove having a recessed shape from the surface of the second recess section side wall 902w. The shape of the terminal positioning section 906 is not limited to the groove as long as the apparatus side terminal positioning section 756 illustrated in FIG. 4 can be received. For example, in another embodiment, the terminal positioning section 906 may be configured by two protruding portions disposed at an interval in the Z direction. The apparatus side terminal positioning section 756 illustrated in FIG. 4 is received between the two protruding portions.

As illustrated in FIGS. 4 and 9, the first terminal positioning section 906t receives the first apparatus side terminal positioning section 756t in the terminal coupling process. That is, the first apparatus side terminal positioning section 756t is inserted into the first terminal positioning section 906t. The second terminal positioning section 906w receives the second apparatus side terminal positioning section 756w in the terminal coupling process. That is, the second apparatus side terminal positioning section 756w is inserted into the second terminal positioning section 906w. The insertion of the apparatus side terminal positioning section 756 into the terminal positioning section 906 is performed after the fitting between the cartridge side identification section 430 and the apparatus side identification section 630 is started. Further, the insertion of the apparatus side terminal positioning section 756 into the terminal positioning section 906 is started before the contact between the apparatus side terminal 721 and the cartridge side terminal 521 is started.

The apparatus side terminal positioning section 756 is received by the terminal positioning section 906, and thus the apparatus side terminal positioning section 756 and the terminal positioning section 906 are in contact with each other. As a result, the movement of the cartridge side terminal 521 in the Z direction and the X direction, which are the directions intersecting the insertion direction D1 with respect to the apparatus side terminal 721, is restricted. That is, the terminal positioning section 906 receives the apparatus side terminal positioning section 756 to restrict the relative movement between the cartridge side terminal 521 and the apparatus side terminal 721 in the direction intersecting the direction along the insertion direction D1. By restricting the movement, the cartridge side terminal 521 is positioned in the Z direction and the X direction, which are the directions intersecting the insertion direction D1 with respect to the apparatus side terminal 721. In the present embodiment, the terminal positioning section 906 is made of the material containing the recycled plastic.

As illustrated in FIG. 5, the protrusion section 418 is formed on the adapter bottom surface 474. More specifically, the protrusion section 418 is formed at an end section of the adapter bottom surface 474 on the adapter rear surface 477 side. The protrusion section 418 releases restriction of a restriction mechanism of the cartridge mounting section 6 that restricts the movement of the adapter 402 for inserting the liquid introduction section 642 into the insertion opening section 446 in the rotation mounting direction D2. In the present embodiment, the protrusion section 418 is made of the material containing the recycled plastic.

As illustrated in FIG. 10, the cartridge engagement section 497 is provided on the rear wall 47. The cartridge engagement section 497 is a recess section recessed from an outer surface of the rear wall 47. In the present embodiment, the cartridge engagement section 497 is made of the material containing the recycled plastic.

As illustrated in FIG. 11, in the mounted state in which the cartridge 4 is mounted in the cartridge mounting section 6, the apparatus side supply section positioning section 644 is received by the supply section positioning section 448 of the cartridge 4. Further, the liquid introduction section 642 and the liquid supply section 442 are coupled to each other. In this case, the cartridge engagement section 497 is engaged with the mounting engagement section 697 included in the cartridge mounting section 6. As a result, the mounted state between the cartridge 4 and the cartridge mounting section 6 is maintained.

The cartridge mounting section 6 includes an apparatus biasing member 625 that applies an external force Ft1 to the support member 610 in order to return the support member 610 to the position in the initial disposition state in the mounted state of the cartridge 4. The apparatus biasing member 625 is a coil spring provided between the support member 610 and a liquid storage section 699, and is in a compressed state in the mounted state. The external force Ft1 having a +Z direction component is applied to the support member 610 due to the compressed state. Therefore, in the mounted state, when the user lifts the rear wall 47 side of the cartridge 4, the cartridge 4 receives the external force Ft1 and rotationally moves in the coupling release direction D3. As a result, the engagement between the mounting engagement section 697 and the cartridge engagement section 497 is released.

As described above, in the cartridge 4 according to the present embodiment, the liquid contact section that is in contact with the liquid is made of the virgin plastic material. In addition, the non-liquid contact section that is not in contact with the liquid is made of the material containing the recycled plastic. In the present embodiment, the liquid contact section is the liquid accommodation container 401 and the first peripheral section 447a in the adapter 402 as illustrated in FIG. 5. In the present disclosure, the "liquid contact section" in the cartridge 4 includes a region that is in contact with the liquid by accommodating the liquid, as well as a region that is likely to be in contact with the liquid by adhering the liquid. For example, when the cartridge 4 is mounted in or removed from the printing apparatus 10, the liquid may adhere to the first peripheral section 447a. Therefore, the liquid contact section includes the first peripheral section 447a that is highly likely to be in contact with the liquid by adhering the liquid, in addition to in addition to the liquid accommodation container 401 that is in contact with the liquid by accommodating the liquid. The non-liquid contact section is a portion of the adapter 402 excluding the first peripheral section 447a. The non-liquid contact section in the adapter 402 includes a specific portion that is at least a portion of the adapter 402 and another portion of the adapter 402. In the present embodiment, the specific portion includes the second peripheral section 447b, the supply section positioning section 448, the terminal mounting section 52, the terminal positioning section 906, the cartridge side identification section 430, the adapter engagement section 410, and the protrusion section 418. The specific portion may be a remaining portion of the adapter 402 excluding the first peripheral section 447a. As a result, the specific portion of the adapter 402 is made of the material containing the recycled plastic in the cartridge, so that the environmental load can be reduced.

In the present embodiment, the liquid accommodation container 401 and the first peripheral section 447a of the adapter 402 are made of the virgin plastic material. This is because the recycled plastic is dissolved in the liquid to generate foreign substances when the member containing the recycled plastic is in contact with the liquid, and the quality of the liquid is likely to be affected. In the present embodiment, the liquid accommodation container 401 and the first peripheral section 447a in the adapter 402 are made of the virgin plastic material, so that the quality of the liquid can be maintained.

In addition, when the member containing the recycled plastic is in contact with the liquid, the strength of the member may be lowered, or the member may be deformed. Therefore, the liquid accommodation container 401 and the peripheral section 447 of the liquid supply section 442 are made of the virgin plastic material, so that it is possible to suppress the decrease in the strength or the deformation of the liquid accommodation container 401 and the first peripheral section 447a of the adapter 402.

As described above, in the present embodiment, the specific portion includes the second peripheral section 447b, the supply section positioning section 448, the terminal mounting section 52, the terminal positioning section 906, the cartridge side identification section 430, the accommodation body engagement section 80, and the protrusion section 418. The specific portion need only have at least any one of the second peripheral section 447b, the supply section positioning section 448, the terminal mounting section 52, the terminal positioning section 906, or the cartridge side identification section 430. As a result, even when the type, the destination, or the like of the printing apparatus 10 or the cartridge 4 is different, the recycled plastic can be uniformly used for the cartridge 4.

In the present embodiment, the specific portion is configured as a separate member with respect to the other portion of the adapter 402. Here, a case in which the two members are "separate members" includes a case in which the two members can be disassembled from each other and a case in which the two members cannot be disassembled from each other but are formed by two-color molding. In the present embodiment, the second peripheral section 447b, the supply section positioning section 448, the terminal mounting section 52, the terminal positioning section 906, and the cartridge side identification section 430 are configured to be disassembled from the other portion of the adapter 402. For example, as the disassemblable configuration, a snap-fit structure may be used, a slide-detachable configuration may be used, or a detachable configuration using a surface fastener may be used. At least any one of the second peripheral section 447b, the supply section positioning section 448, the terminal mounting section 52, the terminal positioning section 906, or the cartridge side identification section 430 may be configured as a separate member with respect to the other portion of the adapter 402. As a result, a usage ratio of the recycled plastic in the specific portion and a usage ratio of the recycled plastic in the other portions of the adapter 402 can be changed.

In the present embodiment, the terminal positioning section 906 illustrated in FIG. 9 is required to have the accuracy or the strength as compared with the other specific portions. In general, when a member is made of the recycled plastic and the virgin plastic, the accuracy or the strength of the member tends to be increased as a composition ratio of the virgin plastic is increased. Therefore, when the specific portion is configured as a separate member with respect to the other portions of the adapter 402, for example, the composition ratio of the virgin plastic used for the terminal positioning section 906 can be made higher than the composition ratio of the virgin plastic used for the supply section positioning section 448. As described above, by configuring the specific portion as a separate member with respect to the other portions of the adapter 402, the usage ratio between the recycled plastic and the virgin plastic can be changed in accordance with the accuracy or the strength required for the member.

In the present embodiment, the cartridge 4 is configured such that the liquid accommodation container 401 and the adapter 402 can be disassembled from each other. Specifically, in the present embodiment, the liquid accommodation container 401 and the adapter 402 are configured to be disassembled by the adapter engagement section 410 having a snap-fit structure. As a result, after the used cartridge 4 is collected, only the liquid accommodation container 401 can be reused, so that the environmental load can be reduced. In another embodiment, the liquid accommodation container 401 and the adapter 402 may have a slide-detachable configuration, or may have a detachable configuration using a surface fastener.

### B. Second Embodiment:

### B-1. Configuration of Printing System:

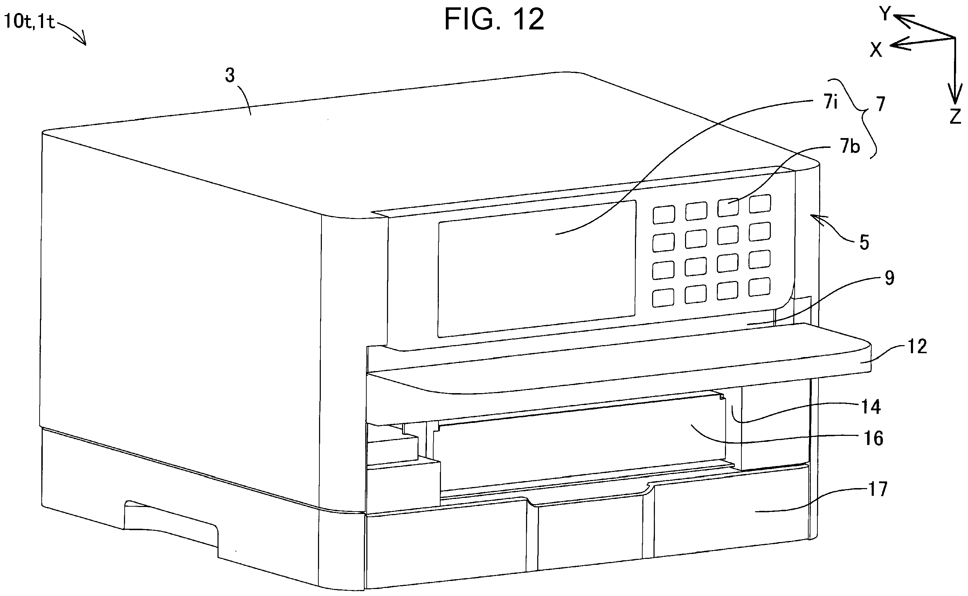

FIG. 12 is a perspective view illustrating a configuration of a printing apparatus 10t constituting a printing system 1t according to a second embodiment. As in the first embodiment, FIG. 12 illustrates XYZ axes that are three spatial axes orthogonal to each other.

In the second embodiment, the printing system 1t is an ink jet printing system. The printing apparatus 10t is an ink jet printer. The printing apparatus 10t includes a housing 3 that is a resin hollow box body constituting an exterior of the printing apparatus 10t. The housing 3 has a substantially rectangular parallelepiped shape. A front surface section 5 located on the -Y direction side is provided with an operation section 7, a medium discharge port 9, a medium reception section 12, a medium accommodation port 14, a medium accommodation section 16, and a cover member 17.

The operation section 7 includes a display section 7i that displays information for the user, and a plurality of operation buttons 7b that receive the operation of the user. The medium discharge port 9 is an outlet of a medium fed out from the inside of the printing apparatus 10t. The medium discharge port 9 is formed as an opening section having a slit shape having a wide width in the X direction, and is open in the -Y direction. The medium reception section 12 protrudes in a form of an eaves in the -Y direction on the lower side of the medium discharge port 9, and receives the medium discharged from the medium discharge port 9.

The medium accommodation port 14 is an opening section for the user to replenish the printing apparatus 10t with the medium. In the present embodiment, the medium accommodation port 14 is open in the -Y direction below the medium reception section 12, and has a substantially rectangular opening shape having a wide width in the X direction. The medium accommodation section 16 is a tray-shaped member that accommodates a stock of media, which are processing target media in the present embodiment. The medium accommodation section 16 is accommodated in the medium accommodation port 14 in a state in which a front surface thereof is visible from the outside of the printing apparatus 10t via the medium accommodation port 14. The user can replenish the printing apparatus 10t with the medium by accommodating the medium in the medium accommodation section 16 pulled out from the printing apparatus 10t in the -Y direction via the medium accommodation port 14, and loading the medium accommodation section 16 from the medium accommodation port 14 to the medium accommodation port 14 again.

The cover member 17 is a plate-shaped member that is made of a resin and that constitutes a portion of an exterior of the printing apparatus 10t. In the present embodiment, the cover member 17 has a substantially rectangular shape having a wide width in the X direction, and is disposed below the medium accommodation port 14. The cover member 17 has a claw section (not illustrated) at an outer peripheral edge thereof, and is detachably attached to the housing 3. The cover member 17 covers and protects a plurality of liquid containers 4 accommodated in the printing apparatus 10t. In the second embodiment, the liquid container 4 is an ink pack. In the description of the second embodiment, the liquid container 4 is referred to as an "ink pack 4t".

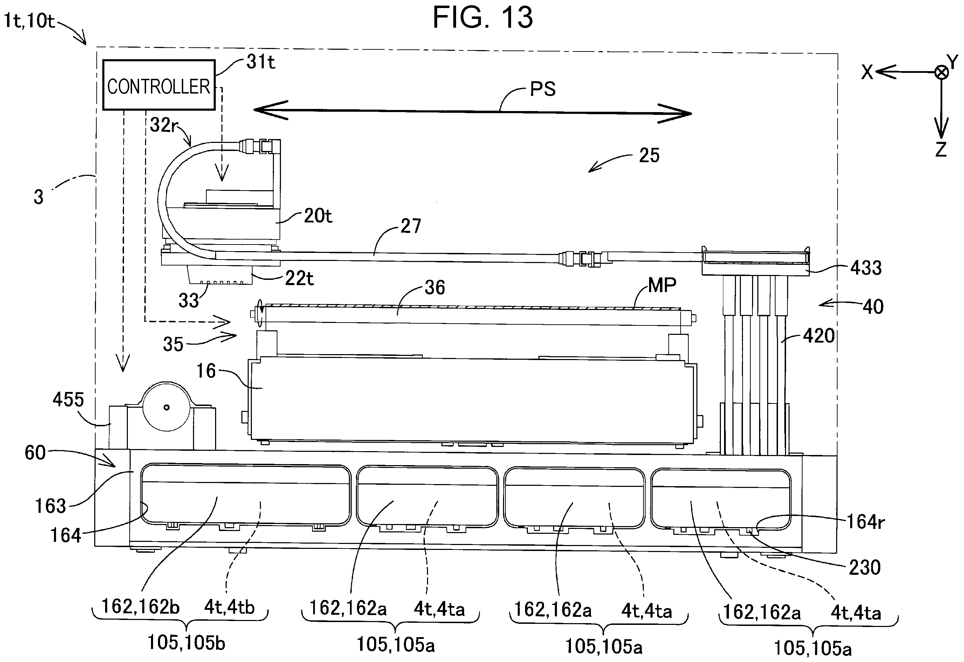

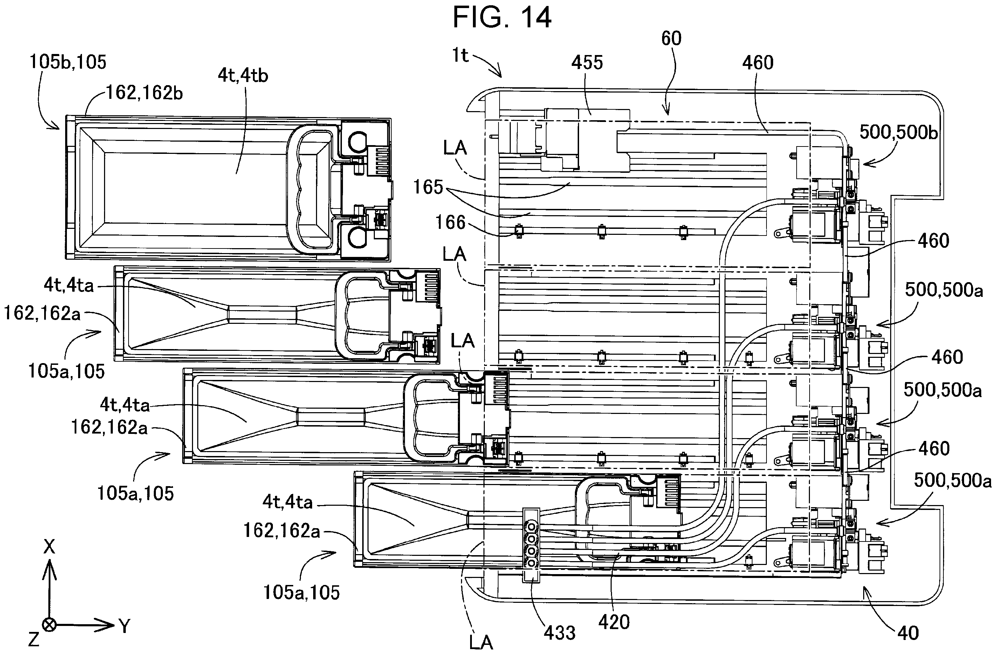

FIG. 13 is a schematic view when the printing apparatus 10t is viewed in the +Y direction in a state in which the housing 3 and the cover member 17 are removed. In FIG. 13, among the main components of the printing apparatus 10t, a controller 31t, an ejection execution section 25, a medium transport section 35, a liquid supply mechanism section 40, and a case accommodation section 60 are extracted and illustrated. FIG. 14 is a schematic view when the printing apparatus 10t is viewed in the +Z direction in a state in which the housing 3 and the cover member 17 are removed. In FIG. 14, the controller 31t, the ejection execution section 25, and the medium transport section 35 illustrated in FIG. 13 are not illustrated. Further, in FIG. 14, for convenience, a state in which each of a plurality of ink packs 4t is pulled out in the -Y direction together with the case 162 from a disposition region LA, which is a mounting position at which the mounting in the printing apparatus 10t is completed, is illustrated.

As illustrated in FIG. 13, the printing apparatus 10t includes the controller 31t, the ejection execution section 25, the medium transport section 35, the liquid supply mechanism section 40, and the case accommodation section 60. In the printing apparatus 10t, the liquid is supplied from the ink pack 4t accommodated in the case accommodation section 60 to the ejection execution section 25 via a supply pipe 420 of the liquid supply mechanism section 40. Then, a printing image is formed on a medium MP by jetting, via the ejection execution section 25, the liquid to the medium MP fed out and transported from the medium accommodation section 16 by the medium transport section 35. The controller 31t, the ejection execution section 25, the medium transport section 35, the liquid supply mechanism section 40, and the case accommodation section 60 will be described in order.

The controller 31t controls the driving of each component in the printing apparatus 10t. The controller 31t is configured by a microcomputer including at least a central processing unit and a main storage unit, and the central processing unit reads various programs into the main storage unit and executes the various programs to exhibit various functions. The function of the controller 31t will be described in order.

As illustrated in FIG. 13, the ejection execution section 25 includes a head section 22t and a plurality of tubes 27. The head section 22t receives the liquid supplied from the liquid supply mechanism section 40 via the plurality of tubes 27. The head section 22t includes a liquid chamber (not illustrated) that accommodates the liquid supplied from the liquid supply mechanism section 40. A nozzle 33 that is open downward is provided on a bottom surface of the liquid chamber. The head section 22t jets the liquid in the liquid chamber from the nozzle 33, by a known method such as applying a pressure to the ink by a piezo element, under the control of the controller 31t.

In the second embodiment, the head section 22t is mounted in a carriage 20t and is configured to reciprocate linearly in the X direction under the control of the controller 31t. FIG. 13 illustrates a double-headed arrow PS indicating a movement direction and a movement range of the head section 22t. In the second embodiment, a main scanning direction of the printing apparatus 10t coincides with the X direction. The ejection execution section 25 includes a guide shaft for moving the carriage 20t, a motor that generates a driving force, and a pulley that transmits the driving force, as a driving mechanism for moving the head section 22t.

The plurality of tubes 27 coupled to the head section 22t have flexibility. The plurality of tubes 27 are arranged in parallel in the Y direction. The plurality of tubes 27 are disposed in a substantially linear shape in the +X direction along a scanning path of the head section 22t from a joint section 433, which is a coupling portion with the supply pipe 420 of the liquid supply mechanism section 40 described below, and are curved upward and folded back in the -X direction to be coupled to the head section 22t. Curved portions 32r of the plurality of tubes 27 are displaced as the head section 22t moves. As a result, the main scanning of the head section 22t is prevented from being hindered by the plurality of tubes 27, and the movement operation of the head section 22t is smoothed.

As illustrated in FIG. 13, the medium transport section 35 transports the medium MP that is the processing target, under the control of the controller 31t. The medium transport section 35 includes a transport roller 36 erected in the X direction below the head section 22t. The above-described medium accommodation section 16 is disposed below the transport roller 36. The medium transport section 35 is provided with a feeding-out mechanism (not illustrated) that feeds out the media MP one by one from the medium accommodation section 16 onto an outer peripheral side surface of the transport roller 36. The medium transport section 35 rotates the transport roller 36 by using a driving motor (not illustrated), and moves the medium MP in the -Y direction below the head section 22t by a rotational driving force. In the present embodiment, a sub-scanning direction of the printing apparatus 10t coincides with the -Y direction. The medium MP that has passed through a lower region of the head section 22t is discharged to the outside of the printing apparatus 10t via the medium discharge port 9 illustrated in FIG. 12.

As illustrated in FIG. 13, when printing processing is executed in the printing apparatus 10t, the controller 31t causes the medium transport section 35 to transport the medium MP in the sub-scanning direction described above. Then, the head section 22t is caused to reciprocate in the main scanning direction along the transport roller 36 above the transport roller 36, and the ink droplets are jetted from the head section 22t toward a printing surface of the medium MP at a timing determined based on the printing data. As a result, ink dots are recorded on the medium MP at positions determined based on the printing data, and an image based on the printing data is formed.

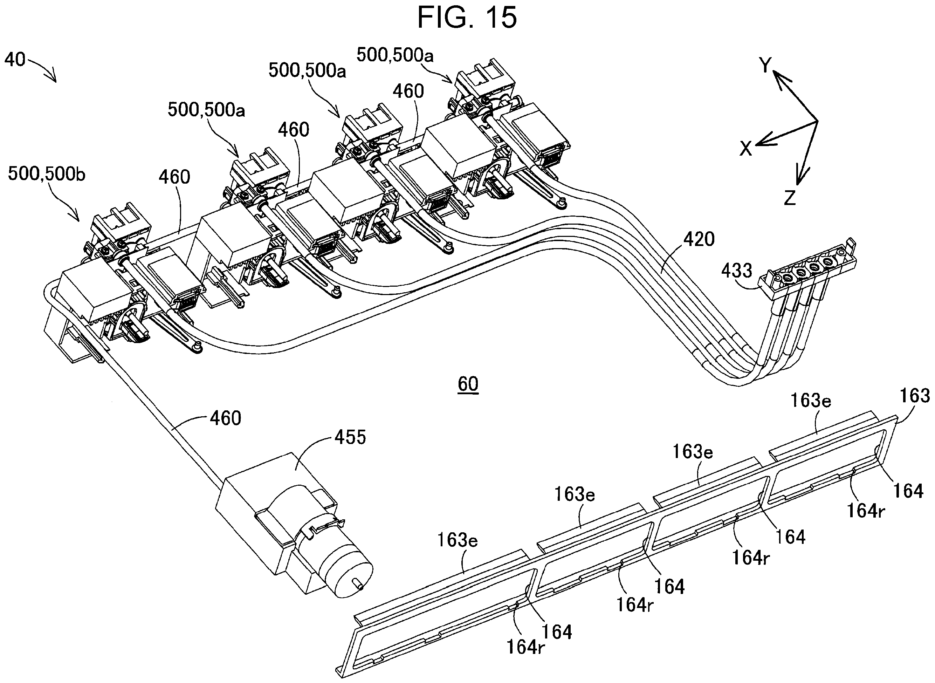

FIG. 15 is a schematic perspective view illustrating the liquid supply mechanism section 40 in an extracted manner. In FIG. 15, in order to illustrate a positional relationship between the liquid supply mechanism section 40 and an opening member 163 in the printing apparatus 10t, the opening member 163 is extracted and illustrated together with the liquid supply mechanism section 40. The liquid supply mechanism section 40 includes a plurality of coupling reception sections 500, a variable pressure generation section 455, and a pressure transmission pipe 460 in addition to the plurality of supply pipes 420 and the joint section 433 described above.

As illustrated in FIG. 14, the liquid supply mechanism section 40 is coupled to each of the plurality of ink packs 4t accommodated in the case accommodation section 60 via the plurality of coupling reception sections 500. In the printing apparatus 10t, as will be described below, four ink packs 4t for each color ink are mounted. Therefore, in the second embodiment, the liquid supply mechanism section 40 includes four coupling reception sections 500 to correspond respectively to the four ink packs 4t.

Among the four ink packs 4t according to the second embodiment, three ink packs 4t are first ink packs 4ta having the same capacity for accommodating the liquid, and one remaining ink pack 4t is a second ink pack 4tb having a larger capacity for accommodating the liquid than the first ink pack 4ta. Among the plurality of coupling reception sections 500, three coupling reception sections 500 are first coupling reception sections 500a corresponding to the first ink packs 4ta, and one remaining coupling reception section 500 is a second coupling reception section 500b corresponding to the second ink pack 4tb. The first coupling reception sections 500a and the second coupling reception section 500b are collectively referred to as a "coupling reception section 500" unless it is necessary to distinguish the first coupling reception sections 500a and the second coupling reception section 500b. The first ink pack 4ta and the second ink pack 4tb are also collectively referred to as an "ink pack 4t" unless it is particularly necessary to distinguish the first ink pack 4ta and the second ink pack 4tb. In the present embodiment, the first coupling reception sections 500a and the second coupling reception section 500b have substantially no difference in configuration with respect to the configuration for coupling with the ink pack 4t.

As illustrated in FIGS. 14 and 15, the plurality of coupling reception sections 500 are installed at an end section of the case accommodation section 60 on the +Y direction side. In the printing apparatus 10t, the coupling reception sections 500 are arranged in a row in the X direction at the lowest position on the rear surface side. Each of the coupling reception sections 500 is installed to be able to receive the coupling of the corresponding ink pack 4t from the -Y direction side. Three first coupling reception sections 500a are installed in parallel at substantially equal intervals from the right side. The second coupling reception section 500b is installed on the leftmost side.

### B-2. Detailed Configuration of Coupling Reception Section:

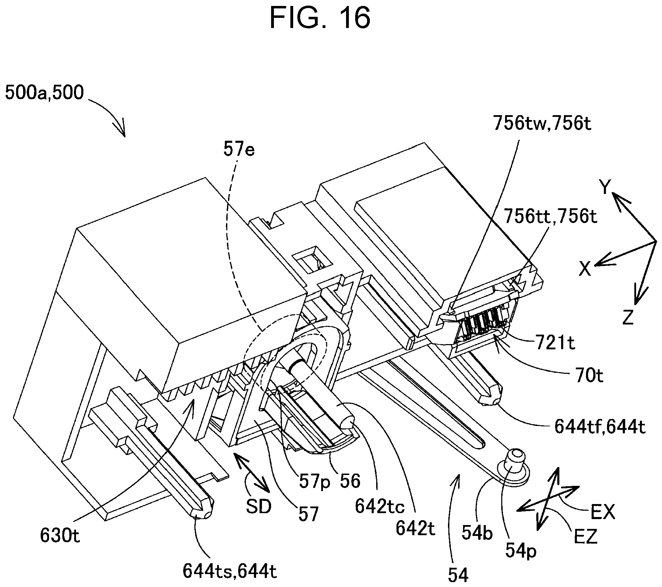

FIG. 16 is a schematic perspective view illustrating a portion of the first coupling reception sections 500a in an extracted manner among the plurality of coupling reception sections 500. The following description is common to the first coupling reception sections 500a and the second coupling reception section 500b unless otherwise specified. The coupling reception section 500 is configured as one component in which a liquid introduction section 642t, an apparatus side terminal section 70t, an apparatus side supply section positioning section 644t, an apparatus side fixing structure 54, and an apparatus side identification section 630t are integrated.

The liquid from the ink pack 4t to flow into the liquid introduction section 642t. In the second embodiment, the liquid introduction section 642t is located at the end section of the case accommodation section 60 on the +Y direction side. The liquid introduction section 642t is configured by a tubular section having a shape extending linearly in the -Y direction, and is open at a distal end section 642tc on the -Y direction side. The liquid introduction section 642t is coupled to the ink pack 4t by inserting the distal end section 642tc into the ink pack 4t. The liquid introduction section 642t protrudes in the -Y direction at substantially the center of the coupling reception section 500 in the X direction.

A rear end section of the liquid introduction section 642t on the +Y direction side communicates with a pump chamber (not illustrated) provided inside the coupling reception section 500. The liquid that has flowed into the liquid introduction section 642t flows into the pump chamber.

In the second embodiment, the coupling reception section 500 is provided with a liquid reception section 56 below the liquid introduction section 642t. The liquid reception section 56 extends in the -Y direction along the liquid introduction section 642t. The liquid reception section 56 is slightly curved downward along a side surface shape on a lower side of the liquid introduction section 642t, and functions as a receiver that receives the liquid leaking from the coupling portion between the liquid introduction section 642t and the ink pack 4t. The liquid reception section 56 can be omitted.

A base end member 57 is provided at the rear end section of the liquid introduction section 642t and the liquid reception section 56 on the +Y direction side. The base end member 57 is a resin member having a through-hole 57p through which the liquid introduction section 642t is inserted. The base end member 57 is attached to be movable in the Y direction. A string spring, which is a biasing member 57e, is disposed on the rear surface side of the base end member 57 to surround the periphery of the liquid introduction section 642t, and applies an elastic force in the -Y direction to the base end member 57. Since the biasing member 57e is located behind the base end member 57, a disposition position thereof is illustrated by a broken line in FIG. 16. The base end member 57 elastically moves in the Y direction as indicated by an arrow SD due to the force applied by the biasing member 57e.

The apparatus side terminal section 70t illustrated in FIG. 16 is electrically coupled to the ink pack 4t. The apparatus side terminal section 70t is located at the end section of the case accommodation section 60 on the +Y direction side. The apparatus side terminal section 70t includes a plurality of apparatus side terminals 721t arranged in the X direction. The plurality of apparatus side terminals 721t protrude from a surface of the apparatus side terminal section 70t and are in contact with and electrically coupled to an ink pack side terminal (which will be described below) of the ink pack 4t. It is desirable that the apparatus side terminal section 70t is biased in a protrusion direction by an elastic member such as a plate spring. In the second embodiment, the apparatus side terminal section 70t is disposed at an inclination angle corresponding to a disposition angle of the ink pack side terminal of the ink pack 4t. The apparatus side terminal section 70t is disposed to face obliquely upward such that the normal vector of the surface thereof has a -Y direction vector component and a -Z direction vector component.

One apparatus side terminal positioning section 756t is provided on each of both sides of the apparatus side terminal section 70t in the X direction. One of the two apparatus side terminal positioning sections 756t is also referred to as a first apparatus side terminal positioning section 756tt, and the other thereof is also referred to as a second apparatus side terminal positioning section 756tw. The apparatus side terminal positioning sections 756tt and 756tw are columnar members protruding in the -Y direction, and function as positioning sections during the coupling of the apparatus side terminal section 70t to the ink pack side terminal of the ink pack 4t.

In the second embodiment, two apparatus side supply section positioning sections 644t illustrated in FIG. 16 are provided, that is, a first apparatus side supply section positioning section 644tf and a second apparatus side supply section positioning section 644ts. A pair of apparatus side supply section positioning sections 644tf and 644ts protrude at positions separated from each other. In the second embodiment, the apparatus side supply section positioning sections 644tf and 644ts are configured as shaft-like portions extending in the -Y direction, and are arranged in parallel with the liquid introduction section 642t. The first apparatus side supply section positioning section 644tf is located on the -X direction side of the liquid introduction section 642t, and the second apparatus side supply section positioning section 644ts is located on the +X direction side of the liquid introduction section 642t. The first apparatus side supply section positioning section 644tf is located on the -X direction side of the apparatus side terminal section 70t. In the present embodiment, the positions of the distal end sections of the pair of apparatus side supply section positioning sections 644tf and 644ts in the Y direction are substantially aligned. Further, the apparatus side supply section positioning sections 644tf and 644ts are provided at substantially the same height position, and are provided at a lower position than the liquid introduction section 642t and the apparatus side terminal section 70t.

When the ink pack 4t is mounted, the pair of apparatus side supply section positioning sections 644tf and 644ts are both inserted into a supply section positioning section (which will be described below) provided in the ink pack 4t. The apparatus side supply section positioning sections 644tf and 644ts have a function of defining the disposition position of the ink pack 4t in the X direction and the disposition angle in the horizontal direction of the ink pack 4t when the ink pack 4t is mounted.

As illustrated in FIG. 16, the apparatus side fixing structure 54 cooperates with a case side fixing structure (which will be described below) provided in the case 162 in which the ink pack 4t is disposed to restrict the movement of the case 162 in the Y direction. In the present embodiment, the apparatus side fixing structure 54 is configured as an arm-shaped member section such that the apparatus side fixing structure 54 enters the lower side of the mounted ink pack 4t, and extends toward the -Y direction side. The apparatus side fixing structure 54 is located on the -X direction side of the liquid introduction section 642t and is located below the apparatus side terminal section 70t.

A distal end section 54b of the apparatus side fixing structure 54 on the -Y direction side protrudes further to the -Y direction side than the distal end section 642tc of the liquid introduction section 642. Further, the distal end section 54b protrudes on the -Y direction side from the distal end sections of the positioning sections 644tf and 644ts. A protrusion section 54p is provided at the distal end section 54b. The protrusion section 54p protrudes in the -Z direction at the center of the distal end section 54t. The protrusion section 54p is engaged with an engaged section (not illustrated) provided in the case side fixing structure in a case accommodated state in which the case 162 is mounted in the case accommodation section 60. More specifically, the movement of the case 162 in the -Y direction is restricted by the protrusion section 54p being locked to the engaged section provided in the case side fixing structure. In the second embodiment, the engaged section provided in the case side fixing structure has a heart cam structure.

As indicated by a double-headed arrow EX, the apparatus side fixing structure 54 is attached in a state in which the rotation in the lateral direction is allowed with the rear end section on the +Y direction side as a fulcrum. The apparatus side fixing structure 54 is biased in the +X direction by an elastic member (not illustrated) disposed inside the coupling reception section 500, and elastically rotates in the -X direction when the external force is applied in the - X direction. Further, as indicated by a double-headed arrow EZ, the apparatus side fixing structure 54 is attached in a state in which the rotation in the height direction is allowed with the rear end section on the +Y direction side as a fulcrum. The apparatus side fixing structure 54 is biased in the -Z direction by the elastic member (not illustrated) disposed inside the coupling reception section 500, and elastically rotates in the +Z direction when the external force is applied in the +Z direction.

As illustrated in FIG. 16, the apparatus side identification section 630t is provided on the +X direction side of the liquid introduction section 642t. The apparatus side identification section 630t is located above the second apparatus side supply section positioning section 644ts. The apparatus side identification section 630t is formed by at least one or more ribs. The pattern shape is determined by the number and the positions of the ribs. The ink pack 4t is also provided with an ink pack side identification section (which will be described below) formed by a rib. The ink pack side identification section forms a different pattern shape depending on the type of the ink pack 4t, that is, the color of the liquid to be accommodated. When the correct type of the ink pack 4t is inserted into the corresponding coupling reception section 500, the apparatus side identification section 630t and the ink pack side identification section are fitted without colliding with each other. On the other hand, when the wrong type of the ink pack 4t is inserted into the coupling reception section 500, the apparatus side identification section 630t and the ink pack side identification section collide with each other, and further insertion of the ink pack 4t is hindered. As a result, it is possible to reduce the possibility that the wrong type of the ink pack 4t is coupled to the coupling reception section 500.

As illustrated in FIG. 13, in the printing apparatus 10t according to the second embodiment, the case accommodation section 60 is provided at the lowest stage. A plurality of cases 162 are accommodated in the case accommodation section 60. As illustrated in FIGS. 13 and 14, when the case 162 is in the case accommodated state described above, the plurality of cases 162 are arranged in a row in the X direction in the case accommodation section 60. The plurality of ink packs 4t are respectively disposed in the plurality of cases 162. One ink pack 4t is disposed in one case 162. That is, the plurality of ink packs 4t are arranged in a row in the X direction and accommodated in the case accommodation section 60 in a state in which the plurality of ink packs 4t are respectively disposed in the cases 162. Further, in FIG. 14, the disposition region LA, which is a disposition position when the case 162 and the ink pack 4t are mounted in the case accommodation section 60, is illustrated by a one-dot chain line.

As illustrated in FIG. 14, the plurality of cases 162 are used to mount the ink pack 4t. In the second embodiment, the case 162 is configured as a tray-shaped container. The case 162 can be mounted in and removed from the printing apparatus 10t by moving the case 162 in the Y direction in the case accommodation section 60. The case 162 can be set in the case accommodation section 60 even in an empty state in which the ink pack 4t is not disposed. The details of the mounting and removal of the case 162 and the ink pack 4t to the printing apparatus 10t will be described below.

The ink pack 4t is detachably disposed on the -Z direction side of the case 162 pulled out from the case accommodation section 60. The ink pack 4t is mounted in the printing apparatus 10t in a state of being disposed in the case 162. That is, the printing apparatus 10t is mounted in the case accommodation section 60 of the printing apparatus 10t in a state of being disposed in the case 162. Further, the ink pack 4t is taken out from the case accommodation section 60 in a state of being disposed in the case 162. The case 162 includes a first case 162a in which the first ink pack 4ta is disposed and a second case 162b in which the second ink pack 4tb is disposed. The first case 162a and the second case 162b are collectively referred to as a "case 162" unless it is particularly necessary to distinguish the first case 162a and the second case 162b. Details of the configuration of the case 162 will be described below.

In the present disclosure, the first ink pack 4ta that is properly disposed in the first case 162a is also referred to as a "first mounting body 105a". Similarly, the second ink pack 4tb that is properly disposed in the second case 162b is also referred to as a "second mounting body 105b". The first mounting body 105a and the second mounting body 105b are collectively referred to as a "mounting body 105" when it is not particularly necessary to distinguish the first mounting body 105a and the second mounting body 105b.

As illustrated in FIGS. 13 and 15, the opening member 163 is disposed at the inlet of the case accommodation section 60. The opening member 163 is a plate-shaped member having a substantially rectangular shape, and is provided with four penetration ports 164 penetrating in the thickness direction. The opening member 163 is fixedly installed at the -Y direction side end section of the case accommodation section 60 in a state in which a thickness direction thereof coincides with the Y direction and a longitudinal direction thereof coincides with the X direction. Each penetration port 164 is an insertion port into which the case 162 is inserted. Each penetration port 164 has an opening shape corresponding to an outer peripheral contour shape of the corresponding case 162 when viewed in the Y direction.

### B-3. Detailed Configuration of Ink Pack:

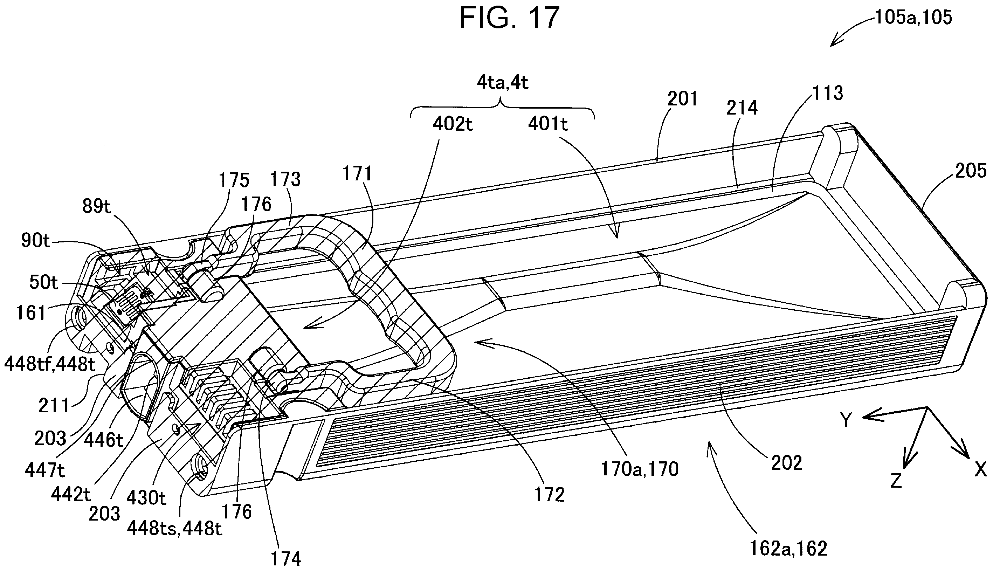

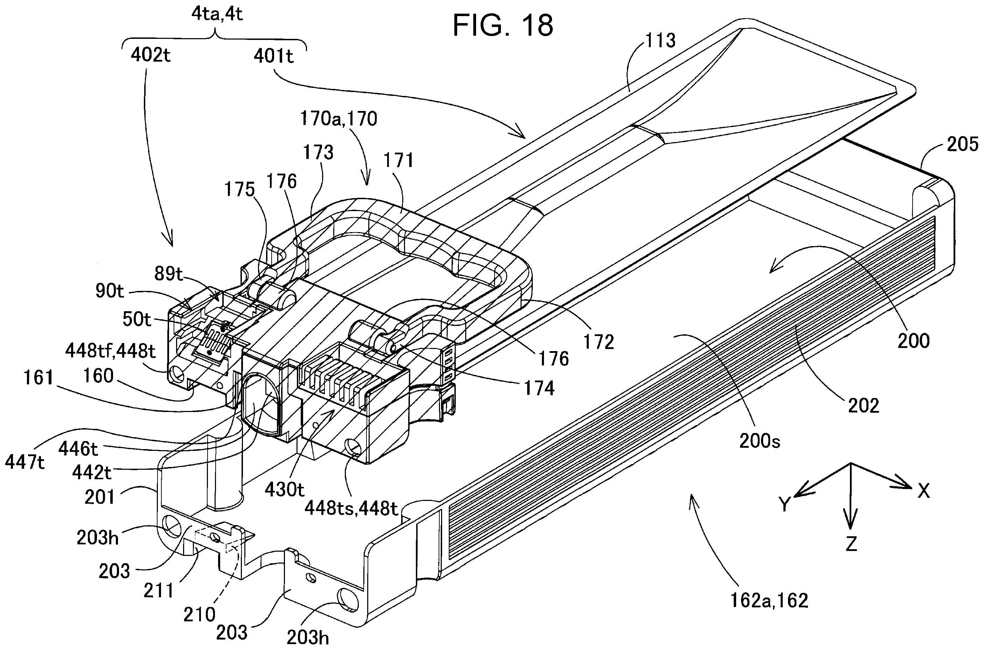

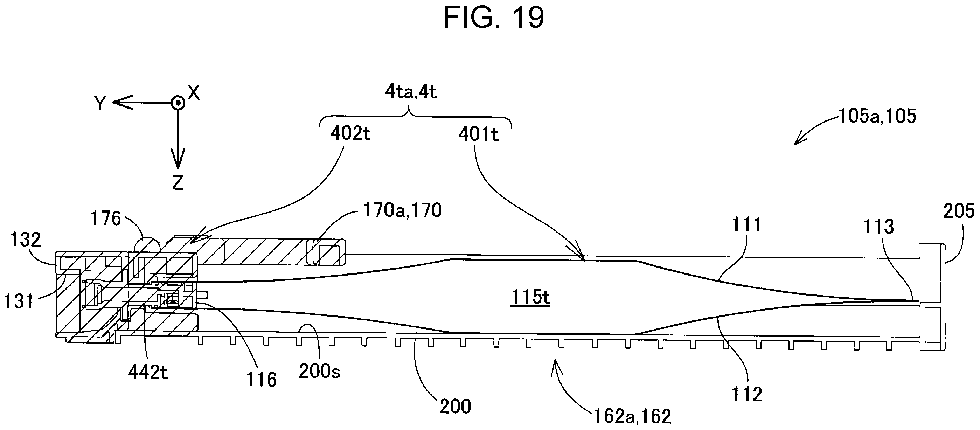

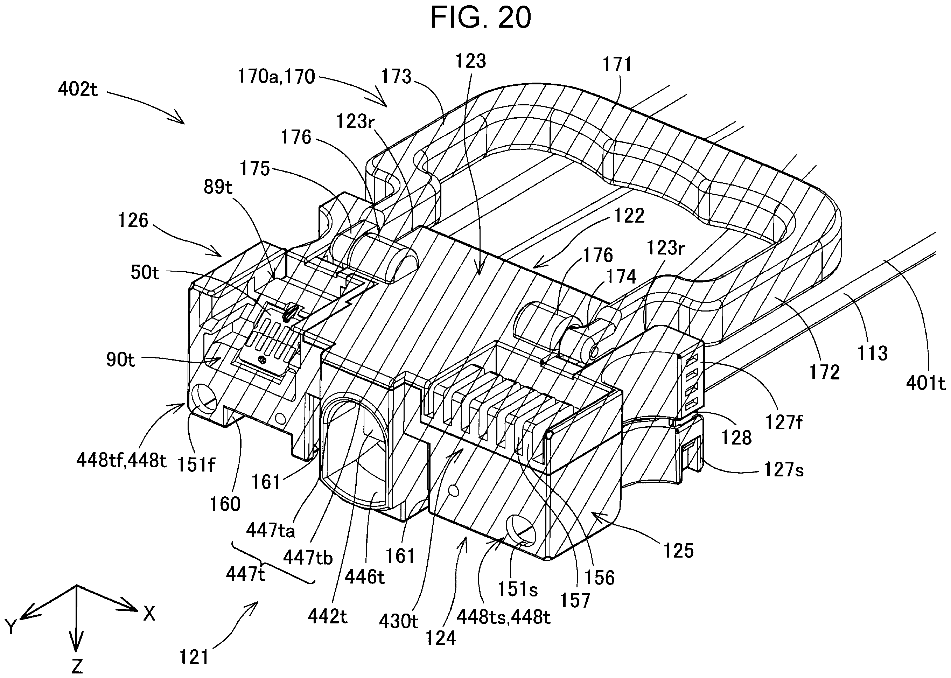

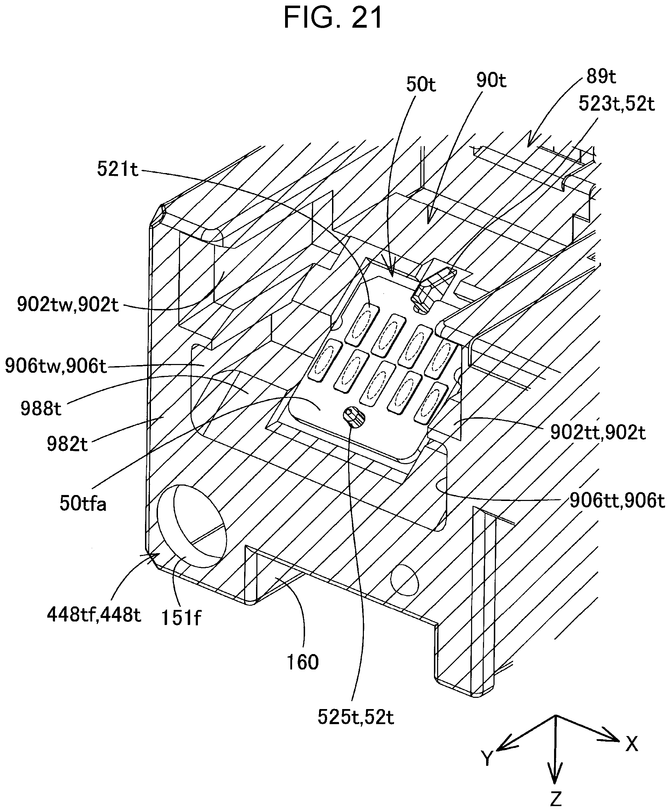

FIG. 17 is a schematic perspective view of the first mounting body 105a when viewed from above. FIG. 18 is a schematic exploded perspective view illustrating a state in which the first ink pack 4ta is taken out from the first case 162a when viewed from above. FIG. 19 is a schematic cross-sectional view of the first mounting body 105a. FIG. 20 is a schematic perspective view of a vicinity of an adapter 402t when viewed from above. FIG. 21 is a schematic perspective view illustrating an outline of a vicinity of a recess section 90t in an extracted manner from FIG. 19.

As illustrated in FIGS. 17 and 18, the first ink pack 4ta is configured by two members. The first ink pack 4ta includes a liquid accommodation container 401t and the adapter 402t. The liquid accommodation container 401t has a substantially rectangular outer peripheral contour shape with the longitudinal direction as the Y direction when viewed in the Z direction. The adapter 402t constitutes an end section portion on the +Y direction side of the liquid accommodation container 401t.

The first ink pack 4ta according to the second embodiment includes a liquid contact section that is in contact with the accommodated ink and a non-liquid contact section that is not in contact with the ink. As in the first embodiment, the liquid contact section is made of the virgin plastic material. The non-liquid contact section is made of a material containing recycled plastic. In the second embodiment, the liquid contact section is the liquid accommodation container 401t and a first peripheral section (which will be described below) in the adapter 402t. The non-liquid contact section is a portion of the adapter 402t excluding a first peripheral section described below. In FIGS. 17 to 21, a portion constituting the non-liquid contact section is hatched. A portion that is not hatched is the liquid contact section.

As illustrated in FIG. 19, the liquid accommodation container 401t is an accommodation body in which a liquid accommodation section 115t that accommodates the liquid is configured. The liquid accommodation container 401t has flexibility. The liquid accommodation container 401t may have flexibility such that the liquid accommodation container 401t is bent by its own weight, or such that the shape of the liquid accommodation container 401t is maintained with respect to its own weight and the liquid accommodation container 401t is bent when a load greater than its own weight is applied. As illustrated in FIG. 18, the liquid accommodation container 401t has a substantially rectangular shape with the longitudinal direction as the Y direction when viewed in the Z direction. As illustrated in FIG. 19, the liquid accommodation container 401t is formed by overlapping two sheet members 111 and 112 and welding outer peripheral end sections 113 of the sheet members 111 and 112.

The first sheet member 111 is disposed on the -Z direction side, and forms an upper surface of the liquid accommodation container 401t. The second sheet member 112 is disposed on the +Z direction side, and forms a lower surface of the liquid accommodation container 401t. The sheet members 111 and 112 has a rectangular shape having the same size as each other. Each of the sheet members 111 and 112 need not have a completely planar shape. It is desirable that each of the sheet members 111 and 112 is molded into a bent shape such that the bulge is gradually formed toward the center in the liquid accommodation container 401t.

Each of the sheet members 111 and 112 is made of a material having flexibility, gas barrier properties, and liquid impermeability. Each of the sheet members 111 and 112 may be made of, for example, a film member, such as polyethylene terephthalate (PET), nylon, or polyethylene. Each of the sheet members 111 and 112 may be formed by laminating a plurality of films made of the above-described materials. In this case, for example, an outer layer may be made of a PET or nylon film having excellent impact resistance, and an inner layer may be made of a polyethylene film having excellent ink resistance. Further, a layer in which aluminum or the like is deposited may be added to the laminated structure.

As illustrated in FIG. 19, a supply port member 116 is attached to the end section of the liquid accommodation container 401t on the +Y direction side. The supply port member 116 will be described below.

As illustrated in FIG. 18, the adapter 402t is attached to the end section of the liquid accommodation container 401t on the +Y direction side. The adapter 402t has a function of being coupled to the corresponding first coupling reception section 500a and a function of fixing the first ink pack 4ta to the first case 162a. The adapter 402t has a substantially rectangular parallelepiped shape in which the X direction is the longitudinal direction.

As illustrated in FIG. 20, the adapter 402t has a first surface section 121, a second surface section 122, a third surface section 123, a fourth surface section 124, a fifth surface section 125, and a sixth surface section 126.

The first surface section 121 faces the +Y direction and forms a distal end surface of the first ink pack 4ta in the mounting direction. As will be described below, components for being coupled to the first coupling reception section 500a are collectively arranged on the first surface section 121 side of the adapter 402t. The second surface section 122 is located at a position facing the first surface section 121 and faces in the -Y direction. The second surface section 122 constitutes a rear end surface of the first ink pack 4ta in the mounting direction. The liquid accommodation container 401t described above is fixed to the second surface section 122. The third surface section 123 intersects the first surface section 121 and the second surface section 122, and faces in the -Z direction. The third surface section 123 constitutes an upper surface section of the adapter 402t. A handle 170a for improving the handleability of the first ink pack 4ta is attached to the third surface section 123. The handle 170a will be described below.

The fourth surface section 124 is located at a position facing the third surface section 123 and intersects the first surface section 121 and the second surface section 122. The fourth surface section 124 is a surface section on the +Z direction side, faces the +Z direction, and forms a bottom surface section of the adapter 402t. The fifth surface section 125 intersects the first surface section 121, the second surface section 122, the third surface section 123, and the fourth surface section 124. The fifth surface section 125 faces the +X direction and constitutes a left surface section of the adapter 402t. The sixth surface section 126 is located at a position facing the fifth surface section 125, and intersects the first surface section 121, the second surface section 122, the third surface section 123, and the fourth surface section 124. The sixth surface section 126 faces the -X direction and constitutes a right surface section of the adapter 402t.

The adapter 402t has a first member 127f and a second member 127s that overlap each other in the Z direction. The adapter 402t is formed with a slit 128. The end section of the liquid accommodation container 401t on the +Y direction side is inserted into the slit 128 formed on the second surface section 122. The liquid accommodation container 401t is fixed to the adapter 402t in a state in which the end section on the +Y direction side is interposed between the first member 127f and the second member 127s in the Z direction.

As illustrated in FIG. 20, the adapter 402t is provided with, as the components for being coupled to the first coupling reception section 500a, a peripheral section 447t as an insertion section that partitions an insertion opening section 446t, a corner section 89t, a supply section positioning section 448t, and an ink pack side identification section 430t. In the adapter 402t, the components are collectively disposed on the first surface section 121 side.

As illustrated in FIG. 20, the insertion opening section 446t is an opening section that is open in the +Y direction, and the liquid introduction section 642t illustrated in FIG. 16 is inserted into the insertion opening section 446t. A liquid supply section 442t is disposed in the insertion opening section 446t. The liquid supply section 442t has a tubular shape. A central axis of the liquid supply section 442t is parallel to the Y direction. The liquid supply section 442t is inserted into the liquid introduction section 642t of the first coupling reception section 500a illustrated in FIG. 16 in the +Y direction. The liquid supply section 442t is provided at a substantially central position in the X direction on the first surface section 121.

As illustrated in FIG. 19, the liquid supply section 442t communicates with the liquid accommodation section 115t. The liquid supply section 442t is a tubular member that is coupled to the supply port member 116 attached to the end section of the liquid accommodation container 401t on the +Y direction side and protrudes from the supply port member 116 on the +Y direction side.

The peripheral section 447t as the insertion section illustrated in FIG. 20 partitions the insertion opening section 446t. The peripheral section 447t has a first peripheral section 447ta that is a region surrounding the insertion opening section 446t and a second peripheral section 447tb that is a region surrounding the first peripheral section 447ta. In the adapter 402t, the first peripheral section 447ta is a region that is likely to be in contact with the liquid. The first peripheral section 447ta may be in contact with the liquid leaking from the liquid supply section 442t, for example, when the coupling between the liquid supply section 442t and the liquid introduction section 642t is released. Therefore, in the present embodiment, the first peripheral section 447ta is made of the virgin plastic material. On the other hand, the second peripheral section 447tb is a region that is not in contact with the liquid. Therefore, the second peripheral section 447tb of the adapter 402t is made of the material containing the recycled plastic.

As illustrated in FIG. 21, a circuit substrate 50t is disposed in the corner section 89t. The circuit substrate 50t includes a plurality of ink pack side terminals 521t disposed on a surface 50tfa. In the present embodiment, as the plurality of ink pack side terminals 521t, nine ink pack side terminals 521t are provided. The circuit substrate 50t is in electrical contact with the apparatus side terminal section 70t of the first coupling reception section 500a illustrated in FIG. 16. The plurality of ink pack side terminals 521t are disposed at positions corresponding to the apparatus side terminals 721t of the apparatus side terminal section 70t.

As illustrated in FIG. 21, a terminal mounting section 52t fixes the circuit substrate 50t to the corner section 89t. In the present embodiment, the terminal mounting section 52t includes a first terminal mounting section 523t and a second terminal mounting section 525t. The first terminal mounting section 523t fixes the circuit substrate 50t from the -Y direction side. The second terminal mounting section 525t fixes the circuit substrate 50 from the +Y direction side. In the second embodiment, the first terminal mounting section 523t and the second terminal mounting section 525t are made of the material containing the recycled plastic.

As illustrated in FIG. 20, the circuit substrate 50t is disposed in the recess section 90t of the corner section 89t. The recess section 90t is provided over the first surface section 121 and the third surface section 123. As illustrated in FIG. 21, the recess section 90t has a recess section front wall 982t that is located on the first surface section 121 side and forms an inlet opening section, a recess section bottom wall 988t that forms the bottom section of the recess section 90, and a pair of recess section side walls 902tt and 902tw.

The recess section bottom wall 988t has a portion inclined with respect to the Y direction. In the present embodiment, the inclined portion is inclined to be located on the +Z direction side as going toward the recess section front wall 982t in the Y direction. The circuit substrate 50t is disposed in the inclined portion.

The pair of recess section side walls 902tt and 902tw are walls coupled to the recess section bottom wall 988t. The pair of recess section side walls 902tt and 902tw face each other in the X direction. The first recess section side wall 902tt is coupled to a +X direction side end section of the recess section bottom wall 988t. The second recess section side wall 902tw is coupled to a -X direction side end section of the recess section bottom wall 988t. When the first recess section side wall 902tt and the second recess section side wall 902tw are used in a non-distinguished manner, the first recess section side wall 902tt and the second recess section side wall 902tw are referred to as a recess section side wall 902t. The inlet opening section, which is an opening formed on the recess section front wall 982t, is an inlet when the apparatus side terminal section 70t is inserted into the recess section 90t.

A pair of terminal positioning sections 906tt and 906tw are provided on the pair of recess section side walls 902t and 902w, respectively. The pair of terminal positioning sections 906tt and 906tw are provided to face each other in the X axis direction. When the pair of terminal positioning sections 906tt and 906tw are used in a distinguished manner, the pair of terminal positioning sections 906tt and 906tw are also referred to as a first terminal positioning section 906tt and a second terminal positioning section 906tw, and when the pair of terminal positioning sections 906tt and 906tw are used in a non-distinguished manner, the pair of terminal positioning sections 906tt and 906tw are also referred to as a terminal positioning section 906t. The terminal positioning section 906t is a groove formed on the recess section side wall 902t. The first terminal positioning section 906tt is a groove having a recessed shape from the surface of the first recess section side wall 902tt. The second terminal positioning section 906tw is a groove having a recessed shape from the surface of the second recess section side wall 902tw.

As illustrated in FIGS. 16 and 21, when the apparatus side terminal section 70t is coupled to the circuit substrate 50t, the first terminal positioning section 906tt receives the first apparatus side terminal positioning section 756tt. That is, the first apparatus side terminal positioning section 756tt is inserted into the first terminal positioning section 906tt. The second terminal positioning section 906tw receives the second apparatus side terminal positioning section 756tw. That is, the second apparatus side terminal positioning section 756tw is inserted into the second terminal positioning section 906tw.

The apparatus side terminal positioning section 756t is received by the terminal positioning section 906t, and thus the apparatus side terminal positioning section 756t and the terminal positioning section 906t are in contact with each other. As a result, the movement of the ink pack side terminal 521t in the X direction and the Z direction, which are the directions intersecting the Y direction that is the insertion direction of the ink pack side terminal 521t with respect to the apparatus side terminal 721t, is restricted. That is, the positioning section 906t receives the apparatus side terminal positioning section 756t to restrict the relative movement between the ink pack side terminal 521t and the apparatus side terminal 721t in the direction intersecting the direction along the Y direction that is the insertion direction. By restricting the movement, the ink pack side terminal 521t is positioned in the Z direction and the X direction, which are directions intersecting the Y direction that is the insertion direction of the ink pack side terminal 521t with respect to the apparatus side terminal 721t. In the present embodiment, the terminal positioning section 906t is made of the material containing the recycled plastic.

As illustrated in FIG. 20, a first supply section positioning section 448tf and a second supply section positioning section 448ts are provided on the first surface section 121 of the adapter 402t. When the first ink pack 4ta is mounted in the printing apparatus 10t, the first supply section positioning section 448tf receives the first apparatus side supply section positioning section 644tf of the first coupling reception section 500a illustrated in FIG. 16, and the second supply section positioning section 448ts receives the second apparatus side supply section positioning section 644ts. As a result, the mounting position of the first ink pack 4ta is appropriately defined.

In the second embodiment, the first supply section positioning section 448tf and the second supply section positioning section 448ts are formed as hole sections extending in the -Y direction, and have a first opening section 151f and a second opening section 151s, respectively. The opening sections 151f and 151s of a first reception section 150f and a second reception section 150s receive the insertion from the +Y direction side of the corresponding apparatus side supply section positioning sections 644tf and 644ts.

The first reception section 150f is located on the -X direction side with respect to the liquid supply section 442t. In the first ink pack 4ta, the first supply section positioning section 448tf is provided at a lower corner section on the -X direction side of the first surface section 121. On the other hand, the second supply section positioning section 448ts is located on the +X direction side with respect to the liquid supply section 442t. In the first ink pack 4ta, the second supply section positioning section 448ts is provided at the lower corner section on the +X direction side of the first surface section 121. In the present embodiment, the pair of supply section positioning sections 448tf and 448ts are made of the material containing the recycled plastic.

As illustrated in FIG. 20, the ink pack side identification section 430t is provided on the +X direction side of the liquid supply section 442t. The ink pack side identification section 430t is provided at a position closer to the end section on the +X direction side at the end section on the +Y direction side of the third surface section 123. The ink pack side identification section 430t is a rib. The ink pack side identification section 430t forms a different pattern shape depending on the color of the liquid accommodated in the ink pack 4t. The pattern shape is determined by the number and the positions of the ribs. In the second embodiment, the ink pack side identification section 430t is made of the material containing the recycled plastic.

As illustrated in FIG. 20, a recess section 160 recessed in the -Z direction is provided in the fourth surface section 124 of the adapter 402t. In the second embodiment, the recess section 160 has a substantially rectangular shape, extends to the first surface section 121 in the +Y direction, and is open in the +Y direction. As illustrated in FIG. 18, when the first ink pack 4ta is disposed in the first case 162a, a protruding section (which will be described below) formed on the bottom surface of the first case 162a is accommodated in the recess section 160.

As illustrated in FIG. 20, a pair of fitting recess sections 161 are formed on the fourth surface section 124 of the adapter 402t. The two fitting recess sections 161 are arranged to interpose the liquid supply section 442t and the insertion opening section 446t in the X direction. The two fitting recess sections 161 are formed at positions adjacent to the liquid supply section 442t and the insertion opening section 446t in the X direction. In the present embodiment, each of the fitting recess sections 161 is formed as a recess section cut in the -Z direction. Each fitting recess section 161 is open in the +Y direction on the first surface section 121, similarly to the recess section 160 described above. When the first ink pack 4ta is disposed in the first case 162a, a portion of the rear surface wall section 203 of the first case 162a illustrated in FIG. 18 is inserted into and fitted to each fitting recess section 161. As a result, the liquid supply section 442t is positioned in the X direction with respect to the first case 162a.

As illustrated in FIG. 20, the handle 170a is a portion that can be gripped by the user when moving the first ink pack 4ta. In the present embodiment, the handle 170a is produced by molding a resin member, such as polypropylene. The handle 170a includes a gripping section 171, two coupling sections 172 and 173, and two base end sections 174 and 175. The gripping section 171 is a portion on which the user puts the hand. The gripping section 171 extends in the X direction.

The two coupling sections 172 and 173 extend from both ends of the gripping section 171 in the direction intersecting the X direction. The first coupling section 172 couples the end section on the +X direction side of the gripping section 171 to the first base end section 174. The second coupling section 173 couples the end section on the -X direction side of the gripping section 171 to the second base end section 175. The base end sections 174 and 175 are shaft-shaped portions having a substantially cylindrical shape, and protrude to face each other along the X direction. It is desirable that the gripping section 171 and the two coupling sections 172 are hollowed out as appropriate for weight reduction.

The first base end section 174 protrudes in the +X direction at the end section of the first coupling section 172, and the second base end section 175 protrudes in the -X direction at the end section of the second coupling section 173. Each of the two base end sections 174 and 175 is coupled to a fixing section 176 provided on the third surface section 123 of the adapter 402t. The handle 170a is rotatably fixed to the adapter 402t by the fixing section 176. In the present embodiment, the fixing section 176 is configured by a shaft hole extending in the X direction, and the base end sections 174 and 175 are inserted into the shaft hole in the X direction.

The handle 170a is provided at a position exposed in a state in which the first ink pack 4ta is disposed in the first case 162a. The handle 170a is provided at a position at which the user can see and operate the handle 170a. In the second embodiment, the handle 170a is made of the material containing the recycled plastic.

### B-4. Detailed Configuration of Case:

As illustrated in FIGS. 17 and 18, the first case 162a has a substantially rectangular parallelepiped shape in which the X direction is the longitudinal direction. In addition, the first case 162a is formed as a hollow box body that is open in the -Z direction and the +Y direction. The first case 162a is made of, for example, a resin member such as polypropylene.

As illustrated in FIG. 18, the first case 162a has a bottom surface wall section 200, two side wall sections 201 and 202, two rear surface wall sections 203, and a front surface wall section 205. The bottom surface wall section 200 is a substantially rectangular wall section constituting the bottom surface section of the first case 162a, and extends in the X direction and the Y direction.

As illustrated in FIGS. 17 and 18, the first side wall section 201 is a substantially rectangular wall section that intersects and is coupled to the long side of the bottom surface wall section 200 on the -X direction side, and constitutes a right side wall section of the first case 162a. The second side wall section 202 is a substantially rectangular wall section that intersects and is coupled to the long side of the bottom surface wall section 200 on the +X direction side, and constitutes a left side wall section of the first case 162a. The first side wall section 201 and the second side wall section 202 extend in parallel with each other substantially over the entire region in the Y direction. The first side wall section 201 and the second side wall section 202 interpose the liquid accommodation container 401t of the first ink pack 4ta in the X direction, and define the disposition angle of the liquid accommodation container 401t in a direction along a horizontal plane in the direction along the Y direction.

As illustrated in FIGS. 17 and 18, the two rear surface wall sections 203 stand in the -Z direction at the end section of the bottom surface wall section 200 on the +Y direction side. Each of the rear surface wall sections 203 is provided at both ends in the X direction, and is coupled to one of the two side wall sections 201 and 202 that is on the same side in the X direction. In a state in which the first ink pack 4ta is disposed, the liquid supply section 442t is disposed between the two rear surface wall sections 203. A portion of the rear surface wall section 203 is inserted into and fitted to each of the fitting recess sections 161 formed on both sides of the liquid supply section 442t in the X direction, and closes each fitting recess section 161.

As illustrated in FIGS. 17 and 18, the two rear surface wall sections 203 have a lower height than each of the side wall sections 201 and 202. The two rear surface wall sections 203 are formed to cover the lower portion of the circuit substrate 50t and the ink pack side identification section 430t of the adapter 402t in a state in which the first ink pack 4ta is disposed in the first case 162a. The rear surface wall section 203 is provided with a through-hole 203h for receiving the insertion of the apparatus side supply section positioning sections 644tf and 644ts illustrated in FIG. 16 at positions corresponding to the supply section positioning sections 448tf and 448ts.

As illustrated in FIG. 18, the front surface wall section 205 extends in the X direction and the Z direction at the end section of the bottom surface wall section 200 on the -Y direction side, and is coupled to the bottom surface wall section 200 and the two side wall sections 201 and 202. The height of the front surface wall section 205 is higher than the two side wall sections 201 and 202.

On a bottom surface 200s of the bottom surface wall section 200, a protruding section 210 protruding in the -Z direction is provided at an end section on the +Y direction side. The protruding section 210 is located at a position closer to the -X direction side than a central section in the X direction, and is located at a position closer to the -X direction side than a pair of fitting protruding sections 207. In the present embodiment, the protruding section 210 has a rectangular shape. The protruding section 210 is formed in a hollow. When the first ink pack 4ta is disposed in the first case 162a, the protruding section 210 is accommodated in the recess section 160 of the adapter 402t described above.

In the second embodiment, when the protruding section 210 is accommodated in the recess section 160, an outer wall surface of the protruding section 210 and an inner wall surface of the recess section 160 are in surface contact with each other. That is, the protruding section 210 is fitted to the recess section 160. Therefore, in the second embodiment, the protruding section 210 and the recess section 160 function as a positioning section of the adapter 402t in the first case 162a.

As described above, in the ink pack 4t according to the second embodiment, the liquid contact section that is in contact with the liquid is made of the virgin plastic material. In addition, the non-liquid contact section that is not in contact with the liquid is made of the material containing the recycled plastic. In the second embodiment, the liquid contact section is the liquid accommodation container 401t and the first peripheral section 447ta in the adapter 402t as illustrated in FIG. 5. The non-liquid contact section is a portion of the adapter 402t excluding the first peripheral section 447ta. The non-liquid contact section in the adapter 402t includes a specific portion that is at least a portion of the adapter 402t and another portion of the adapter 402t. In the present embodiment, the specific portion includes the second peripheral section 447tb constituting the insertion section, the supply section positioning section 448t, the terminal mounting section 52t, the terminal positioning section 906t, and the ink pack side identification section 430t. The specific portion may be a remaining portion of the adapter 402t excluding the first peripheral section 447ta. As a result, in the second embodiment in which the liquid container 4t is the ink pack 4t, the specific portion is made of the material containing the recycled plastic, so that the environmental load can be reduced.

### C. Other Embodiments:

C1. In the first embodiment and the second embodiment described above, the liquid accommodation containers 401 and 401t are configured by one layer. On the other hand, the liquid accommodation containers 401 and 401t may be formed of a multilayer structure including at least two layers. In this case, the liquid contact section in the multilayer may be made of the virgin plastic material, and the non-liquid contact section in the multilayer may be made of the material containing the recycled plastic. For example, the outermost layer and the intermediate layer may be made of the material containing the recycled plastic, and the innermost layer may be made of the virgin plastic material. Here, the multilayer structure may be formed by co-injection molding a layer made of, for example, the virgin plastic material and a layer made of the material containing the recycled plastic. The multilayer structure may be formed by co-molding a layer made of the virgin plastic material and a layer made of the material containing the recycled plastic. In this case, a thickness of any layer in the multilayer may be adjusted by adjusting an opening degree of a valve mechanism or a shutter mechanism at a predetermined timing in the blow molding, or by adjusting a jetting pressure by an extruder, an accumulator, or the like. When the multilayer structure is formed by injection molding or blow molding, for example, a material obtained by dry-blending the material containing the recycled plastic and the virgin plastic material at a weight ratio of 50:50 may be used.

C2. In the first embodiment and the second embodiment described above, the liquid supply sections 442 and 442t constituting the liquid contact section are not made of the material containing the recycled plastic. On the other hand, when using the recycled plastic with which the quality of the liquid can be guaranteed, at least a portion of the liquid supply sections 442 and 442t may be made of the material containing the recycled plastic.

C3. The present disclosure is not limited to the ink jet printer and the ink cartridge thereof, and can be applied to a cartridge mounted in any printing apparatus that ejects a liquid other than the ink. For example, the present disclosure can be applied to various printing apparatuses and cartridges thereof as follows.
1. An image recording apparatus such as facsimile apparatus
2. A printing apparatus that ejects a coloring material used for manufacturing a color filter for an image display device such as a liquid crystal display
3. A printing apparatus that ejects an electrode material used for forming an electrode of an organic electro luminescence (EL) display, a field emission display (FED), or the like
4. A printing apparatus that ejects a liquid containing a bioorganic substance used for manufacturing a biochip
5. A sample printing apparatus as a precise pipette
6. A printing apparatus for a lubricant
7. A printing apparatus for a resin liquid
8. A printing apparatus that ejects a lubricant to a precise machine, such as a timepiece or a camera, in a pinpoint manner
9. A printing apparatus that ejects a transparent resin liquid such as an ultraviolet curable resin liquid onto a substrate for forming a micro hemispherical lens (optical lens) or the like used for an optical communication element or the like
10. A printing apparatus that ejects an acidic or alkaline etching liquid to etch a substrate or the like
11. A printing apparatus including a liquid ejecting head for jetting any other minute amount of liquid droplets

The "liquid droplet" means a state of the liquid jetted from the printing apparatus, and includes forms such as granular, teardrop-shaped, or thread-like with a trailing tail. In addition, the "liquid" referred here need only be a material that can be ejected by the printing apparatus. For example, the "liquid" need only be a material in a state when the substance is in a liquid phase, and a material in a liquid state having high or low viscosity, a sol, gel water, other inorganic solvents, organic solvents, a solution, a liquid resin, and a material in a liquid state such as a liquid metal are also included in the "liquid". In addition, not only the liquid as one state of the substance but also a liquid in which particles of an inorganic material made of a solid such as a pigment or a metal particle are dissolved, dispersed, or mixed in a solvent is included in the "liquid". A typical example of the liquid includes an ink or a liquid crystal as in the above-described embodiment. Here, the ink contains various liquid compositions such as a general water-based ink, an oil-based ink, gel ink, and a hot melt ink.

### D. Other Aspects:

The present disclosure is not limited to the above-described embodiments, and can be implemented in various configurations without departing from the concept of the present disclosure. For example, technical features in the embodiments corresponding to technical features in respective aspects described in SUMMARY of the present disclosure can be replaced or combined as appropriate in order to eliminate some or all of the above-described problems or to achieve some or all of the above-described effects. In addition, unless the technical features are described as essential in the present specification, the technical features can be deleted as appropriate.
1. According to a first aspect of the present disclosure, there is provided a liquid container including a liquid accommodation container, and an adapter. The liquid container includes a liquid contact section that is in contact with a liquid and a non-liquid contact section that is not in contact with the liquid, and a specific portion that is at least a portion of the non-liquid contact section in the adapter is made of a material containing recycled plastic.

According to this aspect, the specific portion of the adapter is made of the material containing the recycled plastic in the cartridge, so that the environmental load can be reduced.

2. In the above-described aspect, the liquid contact section in the adapter may be made of a virgin plastic material.

According to this aspect, the liquid contact section in the adapter is made of the virgin plastic material, so that the quality of the liquid can be maintained.

3. In the above-described aspect, the liquid container may be detachably mounted in a printing apparatus, the specific portion may include a terminal mounting section in which a liquid container side terminal that is electrically coupled to an apparatus side terminal of the printing apparatus is mounted, and a terminal positioning section that positions the liquid container side terminal with respect to the apparatus side terminal, and the specific portion further may include at least any one of an insertion section that partitions an insertion opening section into which a liquid introduction section of the printing apparatus is inserted, a supply section positioning section that positions a liquid supply section of the liquid container with respect to the printing apparatus, or a liquid container side identification section that prevents erroneous insertion of the liquid container into the printing apparatus and that is fitted to an apparatus side identification section of the printing apparatus.

According to this aspect, in addition to the terminal mounting section and the terminal positioning section, the recycled plastic can be used for at least one of the insertion section, the supply section positioning section, or the liquid container side identification section.

4. In the above-described aspect, the non-liquid contact section in the adapter may be configured as a separate member with respect to another portion of the adapter.

According to this aspect, at least any one of the insertion section, the supply section positioning section, the liquid container side terminal, the terminal positioning section, or the liquid container side identification section can be configured as a separate member.

5. In the above-described aspect, the specific portion may be configured to be disassembled from the other portion of the adapter.

According to this aspect, the specific portion can be disassembled from the other portion of the adapter.

6. In the above-described aspect, the adapter may be configured to be disassembled from the liquid accommodation container.

According to this aspect, the liquid accommodation container and the adapter can be disassembled from each other. Therefore, after the used liquid container is collected, only the liquid accommodation container can be reused, so that the environmental load can be reduced.

7. According to a second aspect of the present disclosure, there is provided a liquid container including a liquid accommodation container, and an adapter. The liquid container includes a liquid contact section that is in contact with a liquid and a non-liquid contact section that is not in contact with the liquid, the liquid accommodation container is formed of a multilayer structure including at least two layers, the liquid contact section in the multilayer is made of a virgin plastic material, and the non-liquid contact section in the multilayer is made of a material containing recycled plastic.

According to this aspect, a portion of the liquid accommodation container is made of the material containing the recycled plastic, so that the environmental load can be reduced.

The present disclosure can be implemented in various aspects, and can be implemented in aspects such as a method of manufacturing a cartridge in addition to the above-described aspects.

## Claims

1. A liquid container comprising:
a liquid accommodation container; and
an adapter, wherein
the liquid container includes a liquid contact section that is in contact with a liquid and a non-liquid contact section that is not in contact with the liquid, and
a specific portion that is at least a portion of the non-liquid contact section in the adapter is made of a material containing recycled plastic.

2. The liquid container according to claim 1, wherein
the liquid contact section in the adapter is made of a virgin plastic material.

3. The liquid container according to claim 1, wherein
the liquid container is detachably mounted in a printing apparatus,
the specific portion includes
a terminal mounting section in which a liquid container side terminal that is electrically coupled to an apparatus side terminal of the printing apparatus is mounted, and
a terminal positioning section that positions the liquid container side terminal with respect to the apparatus side terminal, and
the specific portion further includes at least any one of
an insertion section that partitions an insertion opening section into which a liquid introduction section of the printing apparatus is inserted,
a supply section positioning section that positions a liquid supply section of the liquid container with respect to the printing apparatus, or
a liquid container side identification section that prevents erroneous insertion of the liquid container into the printing apparatus and that is fitted to an apparatus side identification section of the printing apparatus.

4. The liquid container according to claim 3, wherein
the non-liquid contact section in the adapter is configured as a separate member with respect to another portion of the adapter.

5. The liquid container according to claim 4, wherein
the specific portion is configured to be disassembled from the other portion of the adapter.

6. The liquid container according to claim 1, wherein
the adapter is configured to be disassembled from the liquid accommodation container.

7. A liquid container comprising:
a liquid accommodation container; and
an adapter, wherein
the liquid container includes a liquid contact section that is in contact with a liquid and a non-liquid contact section that is not in contact with the liquid,
the liquid accommodation container is formed of a multilayer structure including at least two layers,
the liquid contact section in the multilayer is made of a virgin plastic material, and
the non-liquid contact section in the multilayer is made of a material containing recycled plastic.
